# EUROPEAN PATENT APPLICATION

(11) **EP 4 373 169 A1**
(43) Date of publication of application: **22.05.2024**
(21) Application number: 22855537.1
(22) Date of filing: 12.08.2022
(51) Int. Cl.: H04W 52/02, H04W 64/00, H04W 72/04

(54) **COMMUNICATION PROCESSING METHOD AND COMMUNICATION PROCESSING APPARATUS**

(30) Priority: 13.08.2021 CN 202110932837
(71) Applicant: Huawei Technologies Co., Ltd., Shenzhen, Guangdong 518129 (CN)
(72) Inventor: LI, Cheng, Shenzhen, Guangdong 518129 (CN); HUANG, Su, Shenzhen, Guangdong 518129 (CN); XIA, Jinhuan, Shenzhen, Guangdong 518129 (CN)
(74) Representative: Gill Jennings & Every LLP
(86) International application number: PCT/CN2022/112196
(87) International publication number: WO 2023/016557

(57) **Abstract**

Embodiments of this application disclose a communication processing method and a communication processing apparatus, to implement low-power positioning of a terminal device and reduce power consumption overheads of the terminal device, thereby improving a battery life of the terminal device. The method in embodiments of this application includes: An access network device determines configuration information of a sounding reference signal SRS of the terminal device. The access network device determines configuration information of a tracking reference signal TRS for the terminal device, where the configuration information of the TRS is used to configure one or more first TRS resources, and one first TRS resource exists between two adjacent first SRS resources in SRS resources configured based on the configuration information of the SRS.

## Description

This application claims priority to Chinese Patent Application No. 202110932837.X, filed with the China National Intellectual Property Administration on August 13, 2021 and entitled "COMMUNICATION PROCESSING METHOD AND COMMUNICATION PROCESSING APPARATUS", which is incorporated herein by reference in its entirety.

### TECHNICAL FIELD

This application relates to the field of communication technologies, and in particular, to a communication processing method and a communication processing apparatus.

### BACKGROUND

With development of indoor positioning, various positioning terminals are widely used in an industrial factory, an indoor shopping mall, a logistics center, and the like. In the indoor positioning, battery lives of most positioning terminals are short. Therefore, low-power positioning becomes a hot topic in current research. The low-power positioning reduces power consumption overheads of the positioning terminal, to improve a battery life of the positioning terminal device.

Currently, a discontinuous reception (discontinuous reception, DRX) mode is used to implement the low-power positioning. In a DRX cycle, based on configuration information of a sounding reference signal (sounding reference signal, SRS), a terminal device cyclically wakes up from a deep sleep (deep sleep) mode, and enters a micro sleep (micro sleep) mode. The terminal device first implements downlink time-frequency tracking by using a tracking reference signal (tracking reference signal, TRS). Then, the terminal device sends the SRS to an access network device at a moment at which the SRS is sent, and the access network device measures the SRS to determine a position of the terminal device, to implement positioning of the terminal device.

It can be learned that, after entering the micro sleep mode, the terminal device needs to first implement the downlink time-frequency tracking by using the TRS, and then wait to send the SRS to implement the positioning of the terminal device. Consequently, power consumption of the terminal device is high. Therefore, how to reduce the power consumption of the terminal device is a problem worth considering.

### SUMMARY

Embodiments of this application provide a communication processing method and a communication processing apparatus, to reduce power consumption overheads of a terminal device, thereby improving a battery life of the terminal device.

A first aspect of this application provides a communication processing method, including:

An access network device determines configuration information of an SRS of a terminal device. The access network device determines configuration information of a TRS for the terminal device. The configuration information of the TRS is used to configure one or more first TRS resources, and one first TRS resource exists between two adjacent first SRS resources in SRS resources configured based on the configuration information of the SRS.

In the foregoing technical solution, one first TRS resource exists between two adjacent first SRS resources in the SRS resources configured based on the configuration information of the SRS. The terminal device switches from a deep sleep mode to a micro sleep mode, and the terminal device implements time-frequency tracking by using the TRS received on the first TRS resource. The terminal device maintains in the micro sleep mode. The terminal device may send the SRS on a first SRS resource after the first TRS resource, to implement positioning of the terminal device. After sending the SRS, the terminal device may enter the deep sleep mode. One first TRS resource exists between two adjacent first SRS resources. After implementing time-frequency synchronization by using the TRS received on the first TRS resource, the terminal device may send the SRS in a short time. This reduces time spent by the terminal device in maintaining in the micro sleep mode, and prevents the terminal device from wasting unnecessary power consumption, thereby reducing power consumption overheads of the terminal device. In this way, a battery life of the terminal device is improved.

In a possible implementation, one first TRS resource exists before an initial first SRS resource configured based on the configuration information of the SRS.

In the foregoing implementation, at least one first TRS resource exists before the initial first SRS, so that the terminal device performs downlink time-frequency tracking. In this way, the technical solutions of this application may be applied to some more scenarios. For example, before the first SRS resource, the terminal device is in the deep sleep mode. The terminal device needs to switch from the deep sleep mode to the micro sleep mode, to send the SRS carried in the first SRS resource. In this case, before the first SRS resource, the terminal device needs to perform the downlink time-frequency tracking. Therefore, one first TRS resource may be configured before the initial first SRS resource, so that the terminal device performs the downlink time-frequency tracking.

In another possible implementation, the method further includes: The access network device sends the configuration information of the SRS and the configuration information of the TRS to the terminal device.

In the foregoing implementation, the access network device sends the configuration information of the SRS and the configuration information of the TRS to the terminal device, so that the terminal device receives the TRS based on the configuration information of the TRS, and sends the SRS based on the configuration information of the SRS.

In another possible implementation, a cycle of first SRS resources is a positive integer multiple of a cycle of first TRS resources.

In this implementation, the cycle of the first SRS resources is a positive integer multiple of the cycle of the first TRS resources, to ensure that one first TRS resource exists between two adj acent first SRSs, so that the terminal device performs downlink time-frequency synchronization. In this way, the terminal device may send the SRS on the first SRS resource, and enter the deep sleep mode. In this way, the time spent by the terminal device in maintaining in the micro sleep mode is reduced, and the power consumption of the terminal device is reduced, thereby implementing low-power positioning.

In another possible implementation, at least one first SRS resource of a plurality of first SRS resources configured based on the configuration information of the SRS is located in an uplink/downlink switch slot, and one first TRS resource exists in the uplink/downlink switch slot in which the first SRS resource exists;
at least one first SRS resource of a plurality of first SRS resources is located in an uplink slot, and one first TRS resource exists in an N^{th} downlink slot before the uplink slot in which the first SRS resource exists, where N is a positive integer;
at least one first SRS resource of a plurality of first SRS resources is located in an uplink slot, and one first TRS resource exists in an N^{th} uplink/downlink switch slot before the uplink slot in which the first SRS resource exists; or
at least one first SRS resource of a plurality of first SRS resources is located in an uplink/downlink switch slot, and one first TRS resource exists in an N^{th} downlink slot before the uplink/downlink switch slot in which the first SRS resource exists.

This possible implementation shows an example of a plurality of possible position relationships between the first SRS resource and the first TRS resource. In this way, after the terminal device implements the downlink time-frequency synchronization by using the TRS received on the first TRS resource, the terminal device may send the SRS in a short time, and enter the deep sleep state. In this way, the time spent by the terminal device in maintaining in the micro sleep mode is reduced, and the power consumption of the terminal device is reduced, thereby improving the battery life of the terminal device.

In another possible implementation, the method further includes: The access network device determines that a type of the terminal device is a low-power high-accuracy positioning (low-power high-accuracy positioning, LPHAP) terminal device.

In the foregoing implementation, the terminal device is the LPHAP terminal device, and has a low-power positioning requirement or a long battery life requirement. Therefore, for the LPHAP terminal device, the access network device determines the configuration information of the SRS and the configuration information of the TRS that are of the terminal device. One first TRS resource exists between two adjacent first SRS resources in the SRS resources configured based on the configuration information of the SRS. In this way, after implementing the time-frequency synchronization by using the TRS received on the first TRS resource, the terminal device may send the SRS in a short time. This reduces the time spent by the terminal device in maintaining in the micro sleep mode, and prevents the terminal device from wasting the unnecessary power consumption, thereby reducing the power consumption overheads of the terminal device. In this way, the battery life of the terminal device is improved.

In another possible implementation, that the access network device determines that a type of the terminal device is an LPHAP terminal device includes:
The access network device receives capability information of the terminal device, where the capability information includes information about the terminal device whose type is the LPHAP terminal device.

It can be learned that the foregoing shows an example of a possible implementation in which the access network device determines that the terminal device is the LPHAP terminal device. The terminal device may indicate, to the access network device based on the capability information, that the type of the terminal device is the LPHAP terminal device, and does not need to indicate, to the access network device by defining a new message, that the type of the terminal device is the LPHAP terminal device. This improves applicability of the solution.

In another possible implementation, that the access network device determines that a type of the terminal device is an LPHAP terminal device includes:
The access network device receives a preamble sequence from the terminal device, where the preamble sequence is used by the terminal device to initiate random access to the access network device. The access network device identifies, based on the preamble sequence, that the type of the terminal device is the LPHAP terminal device.

The foregoing implementation shows an example of another implementation in which the access network device determines that the terminal device is the LPHAP terminal device. The access network device determines, based on the preamble sequence used by the terminal device to initiate the random access, that the terminal device is the LPHAP terminal device. There is no need to redefine the new message to send indication information.

In another possible implementation, that the access network device determines that a type of the terminal device is an LPHAP terminal device includes:
The access network device receives a radio resource control (radio resource control, RRC) request message from the terminal device, where the RRC request message includes information indicating that the type of the terminal device is the LPHAP terminal device. The access network device determines, based on the RRC request message, that the type of the terminal device is the LPHAP terminal device.

The foregoing implementation shows an example of another implementation in which the access network device determines that the terminal device is the LPHAP terminal device. The terminal device indicates, to the access network device in an RRC request process, that the terminal device is the LPHAP terminal device.

In another possible implementation, that the access network device determines configuration information of a TRS for the terminal device includes:
The access network device receives first indication information from a positioning device, where the first indication information indicates the access network device to configure, for the terminal device, a TRS resource associated with the SRS resource. The access network device determines the configuration information of the TRS based on the configuration information of the SRS and the first indication information.

This possible implementation shows an example of a specific implementation in which the access network device determines the configuration information of the TRS. In this implementation, the access network device may determine the configuration information of the TRS based on the first indication information based on the configuration information of the SRS.

In this way, association between the first SRS resource and the first TRS resource that are of the terminal device is implemented. In this way, after the terminal device implements the downlink time-frequency synchronization by using the TRS received on the first TRS resource, the terminal device may send the SRS by using the first SRS resource, to implement positioning of the terminal device. After sending the SRS, the terminal device may enter the deep sleep mode. One first TRS resource exists between two adjacent first SRS resources. After implementing the time-frequency synchronization, the terminal device may send the SRS in a short time. This reduces the time spent by the terminal device in maintaining in the micro sleep mode, and reduces the power consumption overheads of the terminal device. In this way, the battery life of the terminal device is improved.

In another possible implementation, that the access network device receives first indication information from a positioning device includes: The access network device receives a positioning information request message from the positioning device, where the positioning information request message includes the first indication information.

In this possible implementation, the first indication information may be carried in the positioning information request message, in other words, a specific carrier is provided, to facilitate implementation of the solution.

In another possible implementation, that an access network device determines configuration information of an SRS of a terminal device includes:
The access network device receives SRS resource reservation information and second indication information that are from a positioning device, where the second indication information indicates the access network device to configure a TRS resource associated with an SRS resource corresponding to the SRS resource reservation information.

The access network device determines the configuration information of the SRS based on the SRS resource reservation information.

That the access network device determines configuration information of a TRS for the terminal device includes:
The access network device determines the configuration information of the TRS based on the configuration information of the SRS and the second indication information.

In the foregoing implementation, the access network device configures the configuration information of the SRS for the terminal device based on the SRS resource reservation information. The access network device determines the configuration information of the TRS for the terminal device based on the configuration information of the SRS and the second indication information. In this way, association between the first SRS resource and the first TRS resource that are of the terminal device is implemented. In this way, after the terminal device implements the downlink time-frequency synchronization by using the TRS received on the TRS resource, the terminal device may send the SRS by using the first SRS resource, to implement the positioning of the terminal device. After sending the SRS, the terminal device may enter the deep sleep mode. One first TRS resource exists between two adjacent first SRS resources. After implementing the time-frequency synchronization, the terminal device may send the SRS in a short time. This reduces the time spent by the terminal device in maintaining in the micro sleep mode, and reduces the power consumption overheads of the terminal device. In this way, the battery life of the terminal device is improved.

A second aspect of this application provides a communication processing method, including:
A terminal device receives configuration information of an SRS and configuration information of a TRS that are from an access network device, where the configuration information of the TRS is used to configure one or more first TRS resources, and one first TRS resource exists between two adjacent first SRS resources in SRS resources configured based on the configuration information of the SRS. The terminal device receives the TRS based on the configuration information of the TRS. The terminal device sends the SRS based on the configuration information of the SRS.

In the foregoing technical solution, one first TRS resource exists between two adjacent first SRS resources in the SRS resources configured based on the configuration information of the SRS. The terminal device switches from a deep sleep mode to a micro sleep mode, and the terminal device implements time-frequency tracking by using the TRS received based on the configuration information of the TRS. The terminal device maintains in the micro sleep mode. The terminal device sends the SRS on a first SRS resource based on the configuration information of the SRS, to implement positioning of the terminal device. After sending the SRS, the terminal device may enter the deep sleep mode. One first TRS resource exists between two adjacent first SRS resources. After implementing time-frequency synchronization by using the TRS received on the first TRS resource, the terminal device may send the SRS in a short time. This reduces time spent by the terminal device in maintaining in the micro sleep mode, and prevents the terminal device from wasting unnecessary power consumption, thereby reducing power consumption overheads of the terminal device. In this way, a battery life of the terminal device is improved.

In a possible implementation, one first TRS resource exists before an initial first SRS resource configured based on the configuration information of the SRS.

In the foregoing implementation, one first TRS resource exists before the initial first SRS, so that the terminal device performs downlink time-frequency tracking. In this way, the technical solutions of this application may be applied to some more scenarios. For example, before the first SRS resource, the terminal device is in the deep sleep mode. The terminal device needs to switch from the deep sleep mode to the micro sleep mode, to send the SRS carried in the first SRS resource. In this case, before the first SRS resource, the terminal device needs to perform the downlink time-frequency tracking. Therefore, one first TRS resource may be configured before the initial first SRS resource, so that the terminal device performs the downlink time-frequency tracking.

In another possible implementation, a cycle of first SRS resources is a positive integer multiple of a cycle of first TRS resources.

In this implementation, the cycle of the first SRS resources is a positive integer multiple of the cycle of the first TRS resources, to ensure that one first TRS resource exists between two adj acent first SRSs, so that the terminal device performs downlink time-frequency synchronization. In this way, the terminal device may send the SRS on the first SRS resource, and enter the deep sleep mode. In this way, the time spent by the terminal device in maintaining in the micro sleep mode is reduced, and power consumption of the terminal device is reduced, thereby implementing low-power positioning.

In another possible implementation, at least one first SRS resource of a plurality of first SRS resources configured based on the configuration information of the SRS is located in an uplink/downlink switch slot, and one first TRS resource exists in the uplink/downlink switch slot in which the first SRS resource exists;
at least one first SRS resource of a plurality of first SRS resources is located in an uplink slot, and one first TRS resource exists in an N^{th} downlink slot before the uplink slot in which the first SRS resource exists, where N is a positive integer;
at least one first SRS resource of a plurality of first SRS resources is located in an uplink slot, and one first TRS resource exists in an N^{th} uplink/downlink switch slot before the uplink slot in which the first SRS resource exists; or
at least one first SRS resource of a plurality of first SRS resources is located in an uplink/downlink switch slot, and one first TRS resource exists in an N^{th} downlink slot before the uplink/downlink switch slot in which the first SRS resource exists.

This possible implementation shows an example of a plurality of possible position relationships between the first SRS resource and the first TRS resource. In this way, after the terminal device implements the downlink time-frequency synchronization by using the TRS received on the first TRS resource, the terminal device may send the SRS in a short time, and enter the deep sleep state. In this way, the time spent by the terminal device in maintaining in the micro sleep mode is reduced, and the power consumption of the terminal device is reduced, thereby improving the battery life of the terminal device.

In another possible implementation, the method further includes:
The terminal device sends capability information to the access network device, where the capability information includes information about a terminal device whose type is an LPHAP terminal device.

It can be learned that the foregoing shows an example of a possible implementation in which the terminal device indicates, to the access network device, that the terminal device is the LPHAP terminal device. The terminal device may indicate, to the access network device based on the capability information, that a type of the terminal device is the LPHAP terminal device, and does not need to indicate, to the access network device by defining a new message, that the type of the terminal device is the LPHAP terminal device. This improves applicability of the solution.

In another possible implementation, the method further includes:
The terminal device sends a preamble sequence to the access network device, where the preamble sequence is used by the terminal device to initiate random access to the access network device, and the preamble sequence indicates that a type of the terminal device is an LPHAP terminal device.

The foregoing implementation shows an example of another implementation in which the terminal device indicates, to the access network device, that the terminal device is the LPHAP terminal device. The access network device determines, based on the preamble sequence used by the terminal device to initiate the random access, that the terminal device is the LPHAP terminal device. There is no need to redefine a new message to send indication information.

In another possible implementation, the method further includes:
The terminal device sends an RRC request message to the access network device, where the RRC request message includes information indicating that a type of the terminal device is an LPHAP terminal device.

The foregoing implementation shows an example of another implementation in which the terminal device indicates, to the access network device, that the terminal device is the LPHAP terminal device. The terminal device indicates, to the access network device in an RRC request process, that the terminal device is the LPHAP terminal device.

In another possible implementation, the method further includes:
The terminal device receives a capability request message from a positioning device.

The terminal device sends capability information to the positioning device, where the capability information includes information indicating that a type of the terminal device is an LPHAP terminal device.

In this possible implementation, the terminal device may indicate, to the positioning device, that the terminal device is the LPHAP terminal device, so that the positioning device indicates the access network device to configure, for the terminal device, a TRS resource associated with the SRS resource of the terminal device. This implements low-power positioning of the LPHAP terminal device and improves a battery life of the LPHAP terminal device.

A third aspect of this application provides a communication processing method, including:
A positioning device sends first indication information to an access network device, where the first indication information indicates the access network device to configure, for a terminal device, a TRS resource associated with an SRS resource.

In the foregoing implementation, the positioning device indicates, based on the first indication information, the access network device to configure, for the terminal device, the TRS resource associated with the SRS resource. The access network device may configure, for the terminal device based on the first indication information, the TRS resource associated with the SRS resource, to implement low-power positioning of the terminal device. In this way, a battery life of the terminal device is improved.

In a possible implementation, that a positioning device sends first indication information to an access network device includes:
The positioning device sends a positioning information request message to the access network device, where the positioning information request message includes the first indication information.

In this possible implementation, the first indication information may be carried in the positioning information request message, in other words, a specific carrier is provided, to facilitate implementation of the solution.

In another possible implementation, the method further includes:
The positioning device sends a capability request to the terminal device.

The positioning device receives capability information from the terminal device, where the capability information includes information indicating that a type of the terminal device is an LPHAP terminal device.

In this possible implementation, the terminal device may indicate, to the positioning device, that the terminal device is the LPHAP terminal device, so that the positioning device indicates the access network device to configure, for the terminal device, the TRS resource associated with the SRS resource of the terminal device. This implements low-power positioning of the LPHAP terminal device and improves a battery life of the LPHAP terminal device.

A fourth aspect of this application provides a communication processing method, including:
A positioning device sends SRS resource reservation information and second indication information to an access network device, where the second indication information indicates the access network device to configure, for a terminal device, a TRS resource matching an SRS resource corresponding to the SRS resource reservation information.

In the foregoing implementation, the positioning device indicates, based on the second indication information, the access network device to configure, for the terminal device, the TRS resource associated with the SRS resource. In this way, the access network device may configure, for the terminal device based on first indication information, the TRS resource associated with the SRS resource, to implement low-power positioning of an LPHAP terminal device. In this way, a battery life of the LPHAP terminal device is improved.

A fifth aspect of this application provides a communication processing apparatus, including:
a processing module, configured to: determine configuration information of an SRS of a terminal device; and determine configuration information of a TRS for the terminal device, where the configuration information of the TRS is used to configure one or more first TRS resources, and one first TRS resource exists between two adjacent first SRS resources in SRS resources configured based on the configuration information of the SRS.

In a possible implementation, one first TRS resource exists before an initial first SRS resource configured based on the configuration information of the SRS.

In another possible implementation, the communication processing apparatus further includes a transceiver module.

The transceiver module is configured to send the configuration information of the SRS and the configuration information of the TRS to the terminal device.

In another possible implementation, a cycle of first SRS resources is a positive integer multiple of a cycle of first TRS resources.

In another possible implementation, at least one first SRS resource of a plurality of first SRS resources configured based on the configuration information of the SRS is located in an uplink/downlink switch slot, and one first TRS resource exists in the uplink/downlink switch slot in which the first SRS resource exists;
at least one first SRS resource of a plurality of first SRS resources is located in an uplink slot, and one first TRS resource exists in an N^{th} downlink slot before the uplink slot in which the first SRS resource exists, where N is a positive integer;
at least one first SRS resource of a plurality of first SRS resources is located in an uplink slot, and one first TRS resource exists in an N^{th} uplink/downlink switch slot before the uplink slot in which the first SRS resource exists; or
at least one first SRS resource of a plurality of first SRS resources is located in an uplink/downlink switch slot, and one first TRS resource exists in an N^{th} downlink slot before the uplink/downlink switch slot in which the first SRS resource exists.

In another possible implementation, the processing module is further configured to:
determine that a type of the terminal device is an LPHAP terminal device.

In another possible implementation, the processing module is specifically configured to:
receive capability information of the terminal device, where the capability information includes information about the terminal device whose type is the LPHAP terminal device.

In another possible implementation, the processing module is specifically configured to:
receive a preamble sequence from the terminal device, where the preamble sequence is used by the terminal device to initiate random access to the communication processing apparatus; and identify, based on the preamble sequence, that the type of the terminal device is the LPHAP terminal device.

In another possible implementation, the processing module is specifically configured to:
receive an RRC request message from the terminal device, where the RRC request message includes information indicating that the type of the terminal device is the LPHAP terminal device.

In another possible implementation, the processing module is specifically configured to:
receive first indication information from a positioning device, where the first indication information indicates the communication processing apparatus to configure, for the terminal device, a TRS resource associated with the SRS resource; and
determine the configuration information of the TRS based on the configuration information of the SRS and the first indication information.

In another possible implementation, the processing module is specifically configured to:
receive a positioning information request message from the positioning device, where the positioning information request message includes the first indication information.

In another possible implementation, the processing module is specifically configured to:
receive SRS resource reservation information and second indication information that are from a positioning device, where the second indication information indicates the communication processing apparatus to configure a TRS resource associated with an SRS resource corresponding to the SRS resource reservation information;
determine the configuration information of the SRS based on the SRS resource reservation information; and
determine the configuration information of the TRS based on the configuration information of the SRS and the second indication information.

A sixth aspect of this application provides a communication processing apparatus, including:
a transceiver module, configured to: receive configuration information of an SRS and configuration information of a TRS that are from an access network device, where the configuration information of the TRS is used to configure one or more first TRS resources, and one first TRS resource exists between two adjacent first SRS resources in SRS resources configured based on the configuration information of the SRS; receive the TRS based on the configuration information of the TRS; and send the SRS based on the configuration information of the SRS.

In a possible implementation, one first TRS resource exists before an initial first SRS resource configured based on the configuration information of the SRS.

In another possible implementation, a cycle of first SRS resources is a positive integer multiple of a cycle of first TRS resources.

In another possible implementation, at least one first SRS resource of a plurality of first SRS resources configured based on the configuration information of the SRS is located in an uplink/downlink switch slot, and one first TRS resource exists in the uplink/downlink switch slot in which the first SRS resource exists;
at least one first SRS resource of a plurality of first SRS resources is located in an uplink slot, and one first TRS resource exists in an N^{th} downlink slot before the uplink slot in which the first SRS resource exists, where N is a positive integer;
at least one first SRS resource of a plurality of first SRS resources is located in an uplink slot, and one first TRS resource exists in an N^{th} uplink/downlink switch slot before the uplink slot in which the first SRS resource exists; or
at least one first SRS resource of a plurality of first SRS resources is located in an uplink/downlink switch slot, and one first TRS resource exists in an N^{th} downlink slot before the uplink/downlink switch slot in which the first SRS resource exists.

In another possible implementation, the transceiver module is further configured to:
send capability information to the access network device, where the capability information includes information about a communication processing apparatus whose type is an LPHAP terminal device.

In another possible implementation, the transceiver module is further configured to:
send a preamble sequence to the access network device, where the preamble sequence is used by the communication processing apparatus to initiate random access to the access network device, and the preamble sequence indicates that a type of the communication processing apparatus is an LPHAP terminal device.

In another possible implementation, the transceiver module is further configured to:
send an RRC request message to the access network device, where the RRC request message includes information indicating that a type of the communication processing apparatus is an LPHAP terminal device.

In another possible implementation, the transceiver module is further configured to:
receive a capability request message from a positioning device; and
send capability information to the positioning device, where the capability information includes information indicating that a type of the communication processing apparatus is an LPHAP terminal device.

A seventh aspect of this application provides a communication processing apparatus, including:
a transceiver module, configured to send first indication information to an access network device, where the first indication information indicates the access network device to configure, for a terminal device, a TRS resource associated with an SRS resource.

In a possible implementation, the transceiver module is specifically configured to:
send a positioning information request message to the access network device, where the positioning information request message includes the first indication information.

In a possible implementation, the transceiver module is further configured to:
send a capability request message to the terminal device; and
receive capability information from the terminal device, where the capability information includes information indicating that a type of the terminal device is an LPHAP terminal device.

An eighth aspect of this application provides a communication processing apparatus, including:
a transceiver module, configured to send SRS resource reservation information and second indication information to an access network device, where the second indication information indicates the access network device to configure, for a terminal device, a TRS resource matching an SRS resource corresponding to the SRS resource reservation information.

A ninth aspect of embodiments of this application provides a communication processing apparatus. The communication processing apparatus includes a processor and a memory. The memory stores a computer program. The processor is configured to invoke and run the computer program stored in the memory, to enable the processor to implement any implementation of the first aspect.

Optionally, the communication processing apparatus further includes a transceiver. The processor is further configured to control the transceiver to send and receive a signal.

A tenth aspect of embodiments of this application provides a communication processing apparatus. The communication processing apparatus includes a processor and a memory. The memory stores a computer program. The processor is configured to invoke and run the computer program stored in the memory, to enable the processor to implement any implementation of the second aspect.

Optionally, the communication processing apparatus further includes a transceiver. The processor is further configured to control the transceiver to send and receive a signal.

An eleventh aspect of embodiments of this application provides a communication processing apparatus. The communication processing apparatus includes a processor and a memory. The memory stores a computer program. The processor is configured to invoke and run the computer program stored in the memory, to enable the processor to implement any implementation of the third aspect.

Optionally, the communication processing apparatus further includes a transceiver. The processor is further configured to control the transceiver to send and receive a signal.

A twelfth aspect of embodiments of this application provides a communication processing apparatus. The communication processing apparatus includes a processor and a memory. The memory stores a computer program. The processor is configured to invoke and run the computer program stored in the memory, to enable the processor to implement any implementation of the third aspect.

Optionally, the communication processing apparatus further includes a transceiver. The processor is further configured to control the transceiver to send and receive a signal.

A thirteenth aspect of embodiments of this application provides a computer program product including instructions. When the computer program product runs on a computer, the computer is enabled to perform any implementation of the first aspect to the fourth aspect.

A fourteenth aspect of embodiments of this application provides a computer-readable storage medium, including computer instructions. When the computer instructions are run on a computer, the computer is enabled to perform any implementation of the first aspect to the fourth aspect.

A fifteenth aspect of embodiments of this application provides a chip apparatus, including a processor, configured to: be connected to a memory, and invoke a program stored in the memory, to enable the processor to perform any implementation of the first aspect to the fourth aspect.

A sixteenth aspect of embodiments of this application provides a communication system. The communication system includes the communication processing apparatus according to the fifth aspect, the communication processing apparatus according to the sixth aspect, and the communication processing apparatus according to the seventh aspect. Alternatively, the communication system includes the communication processing apparatus according to the fifth aspect, the communication processing apparatus according to the sixth aspect, and the communication processing apparatus according to the eighth aspect.

According to the foregoing technical solutions, it can be learned that embodiments of this application have the following advantages.

It can be learned from the foregoing technical solutions that an access network device determines configuration information of an SRS of a terminal device, and the access network device determines configuration information of a TRS for the terminal device, where the TRS is used by the terminal device to perform time-frequency tracking. The configuration information of the TRS is used to configure one or more TRS resources, and at least one TRS resource exists between two adjacent first SRS resources in SRS resources configured based on the configuration information of the SRS. It can be learned that the at least one first TRS resource exists between two adjacent first SRS resources in the SRS resources configured based on the configuration information of the SRS. The terminal device switches from a deep sleep mode to a micro sleep mode, and the terminal device implements the time-frequency tracking by using the TRS received on the TRS resource. The terminal device maintains in the micro sleep mode. The terminal device may send the SRS on a first SRS resource after the TRS resource, to implement positioning of the terminal device. After sending the SRS, the terminal device may enter the deep sleep mode. The at least one first TRS resource exists between two adjacent first SRS resources. After implementing time-frequency synchronization, the terminal device may send the SRS in a short time. This reduces time spent by the terminal device in maintaining in the micro sleep mode, and prevents the terminal device from wasting unnecessary power consumption, thereby reducing power consumption overheads of the terminal device. In this way, a battery life of the terminal device is improved.

### BRIEF DESCRIPTION OF DRAWINGS

FIG. 1 is a schematic diagram of a communication system according to an embodiment of this application;
FIG. 2 is a schematic diagram of an embodiment of a communication processing method according to an embodiment of this application;
FIG. 3A is a schematic diagram of a first SRS resource and a first TRS resource according to an embodiment of this application;
FIG. 3B is another schematic diagram of a first SRS resource and a first TRS resource according to an embodiment of this application;
FIG. 3C is another schematic diagram of a first SRS resource and a first TRS resource according to an embodiment of this application;
FIG. 4A is another schematic diagram of a first SRS resource and a first TRS resource according to an embodiment of this application;
FIG. 4B is another schematic diagram of a first SRS resource and a first TRS resource according to an embodiment of this application;
FIG. 4C is another schematic diagram of a first SRS resource and a first TRS resource according to an embodiment of this application;
FIG. 4D is another schematic diagram of a first SRS resource and a first TRS resource according to an embodiment of this application;
FIG. 4E is another schematic diagram of a first SRS resource and a first TRS resource according to an embodiment of this application;
FIG. 5 is a schematic diagram of another embodiment of a communication processing method according to an embodiment of this application;
FIG. 6 is a schematic diagram of another embodiment of a communication processing method according to an embodiment of this application;
FIG. 7 is a schematic diagram of another embodiment of a communication processing method according to an embodiment of this application;
FIG. 8 is a schematic diagram of another embodiment of a communication processing method according to an embodiment of this application;
FIG. 9 is a schematic diagram of another embodiment of a communication processing method according to an embodiment of this application;
FIG. 10 is a schematic diagram of another embodiment of a communication processing method according to an embodiment of this application;
FIG. 11 is a schematic diagram of a structure of a communication processing apparatus according to an embodiment of this application;
FIG. 12 is a schematic diagram of another structure of a communication processing apparatus according to an embodiment of this application;
FIG. 13 is a schematic diagram of another structure of a communication processing apparatus according to an embodiment of this application;
FIG. 14 is a schematic diagram of another structure of a communication processing apparatus according to an embodiment of this application;
FIG. 15 is a schematic diagram of a structure of a terminal device according to an embodiment of this application; and
FIG. 16 is a schematic diagram of another structure of a communication processing apparatus according to an embodiment of this application.

### DESCRIPTION OF EMBODIMENTS

Embodiments of this application provide a communication processing method and a communication processing apparatus, to reduce power consumption overheads of a terminal device, thereby improving a battery life of the terminal device.

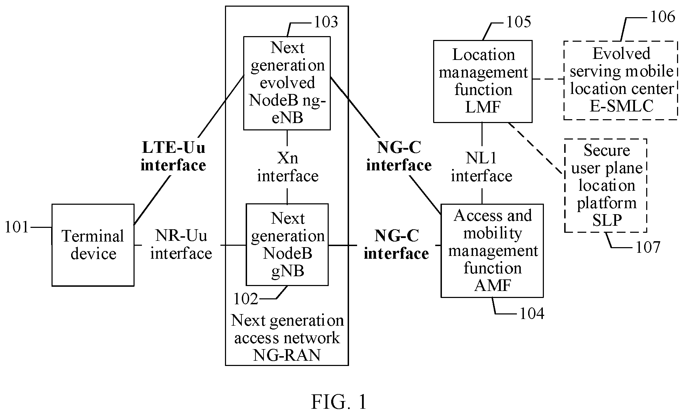

FIG. 1 is a schematic diagram of a communication system according to an embodiment of this application. Refer to FIG. 1. The communication system includes a terminal device 101, a next generation NodeB (next Generation NodeB, gNB) 102, a next generation evolved NodeB (next generation evolved NodeB, ng-eNB) 103, an access and mobility management function (access and mobility management function, AMF) 104, and a location management function (location management function, LMF) 105. The LMF 105 is a network element, a module, or a component that is in an NR core network and that provides a positioning function for the terminal device.

Optionally, the communication system further includes an evolved serving mobile location center (evolved serving mobile location center, E-SMLC) 106 and a secure user plane location platform (secure user plane location location platform, SLP) 107. The E-SMLC 106 is a network element, a module, or a component that is in a 4G core network and that provides a positioning function. The SLP 107 is a network element, a module, or a component that is in the 4G core network and that is configured to process a user plane secure positioning protocol.

The terminal device 101 communicates with an access network device (for example, the gNB 102 or the ng-eNB 103 in FIG. 1) through a Uu interface. The ng-eNB 103 is an access network device in a long term evolution (Long Term Evolution, LTE) communication system, and the gNB 102 is an access network device in an NR communication system. In the communication system, access network devices communicate with each other through an Xn interface, and the access network devices communicate with the AMF 104 through NG-C interfaces. The AMF 104 communicates with the LMF 105 through an NL1 interface, and the AMF 104 is equivalent to a router for communication between the access network devices and the LMF 105. The LMF 105 is configured to perform positioning calculation on a position of the terminal device.

FIG. 1 merely shows an example in which the communication system includes two access network devices: the gNB and the ng-eNB. However, in actual application, the communication system may include at least one access network device. This is not specifically limited in this application.

The following describes the access network device and the terminal device in the communication system provided in this embodiment of this application.

The access network device is an apparatus that is deployed in a radio access network and that provides a wireless communication function for the terminal device. The access network device is a base station, and the base station is a macro base station, a micro base station (also referred to as a small cell), a relay station, an access point (access point, AP), a wearable device, a vehicle-mounted device, or the like in various forms. The base station may alternatively be a transmission reception node (Transmission Reception Point, TRP), a transmission measurement function (Transmission measurement function, TMF), or the like. For example, the base station in this embodiment of this application may be a base station in new radio (new radio, NR). The base station in the 5G NR may also be referred to as a transmission reception point (transmission reception point, TRP), a transmission point (transmission point, TP), a next generation NodeB (next generation NodeB, ng-NB), or an evolved NodeB (evolved NodeB, eNB, or eNodeB) in the long term evolution (long term evolution, LTE) system.

The terminal device may be a wireless terminal device that can receive scheduling and indication information that are of the access network device. The wireless terminal device may be a device that provides voice and/or data connectivity for a user, a handheld device having a wireless connection function, or another processing device connected to a wireless modem.

The terminal device is also referred to as user equipment (user equipment, UE), a mobile station (mobile station, MS), a mobile terminal (mobile terminal, MT), or the like, and is a device that includes a wireless communication function (that is, providing the voice/data connectivity for the user), for example, a handheld device having the wireless connection function or a vehicle-mounted device. Currently, some examples of the terminal device are a mobile phone (mobile phone), a tablet computer, a laptop computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote surgery (remote medical surgery), a wireless terminal in a smart grid (smart grid), a wireless terminal in transportation safety (transportation safety), a wireless terminal in a smart city (smart city), and a wireless terminal in a smart home (smart home).

In this embodiment of this application, in the communication system shown in FIG. 1, the LMF is a name in a current communication system. In a future communication system, the name of the LMF may change with evolution of the communication system. Therefore, the LMF is referred to as a positioning device in the following to describe embodiments of this application. The positioning device is configured to perform the positioning calculation on the position of the terminal device. In the current communication system or the future communication system, a functional network element that is with another name and that has a function similar to that of the positioning device may be understood as the positioning device in embodiments of this application, and is applicable to the communication processing method provided in embodiments of this application.

The following describes the technical solutions of this application with reference to specific embodiments.

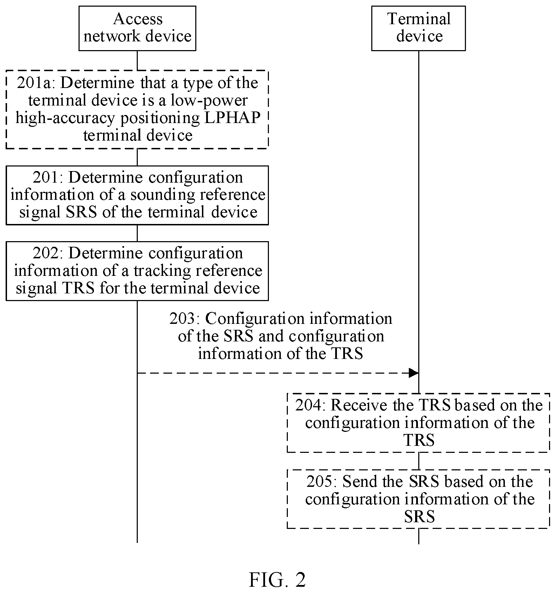

FIG. 2 is a schematic diagram of an embodiment of a communication processing method according to an embodiment of this application. Refer to FIG. 2. The communication processing method includes the following steps.

201: An access network device determines configuration information of an SRS of a terminal device.

SRS resources configured based on the configuration information of the SRS include a plurality of first SRS resources. The first SRS resource occupies one or more time-domain symbols. An SRS resource in a sending occasion when the terminal device sends the SRS is referred to as the first SRS resource.

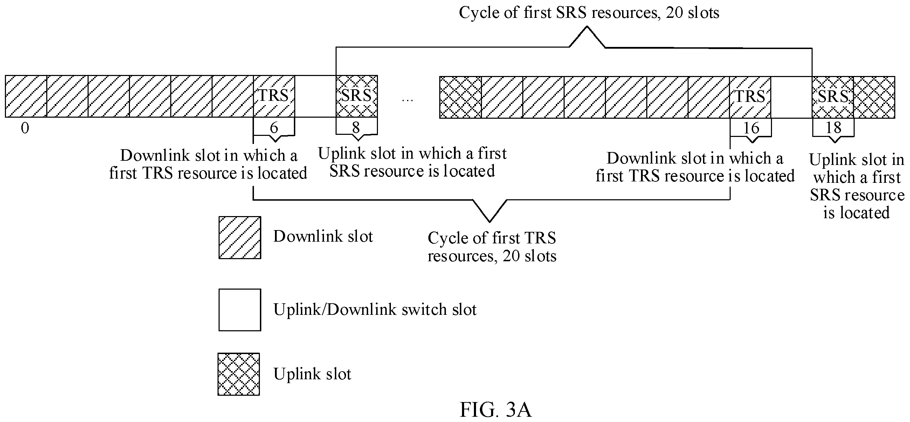

For example, as shown in FIG. 3A, the SRS resources configured based on the configuration information of the SRS include the plurality of first SRS resources. Each first SRS resource occupies some or all time-domain symbols of one uplink slot. A slot in which one first SRS resource is located may be understood as the sending occasion when the terminal device sends the SRS.

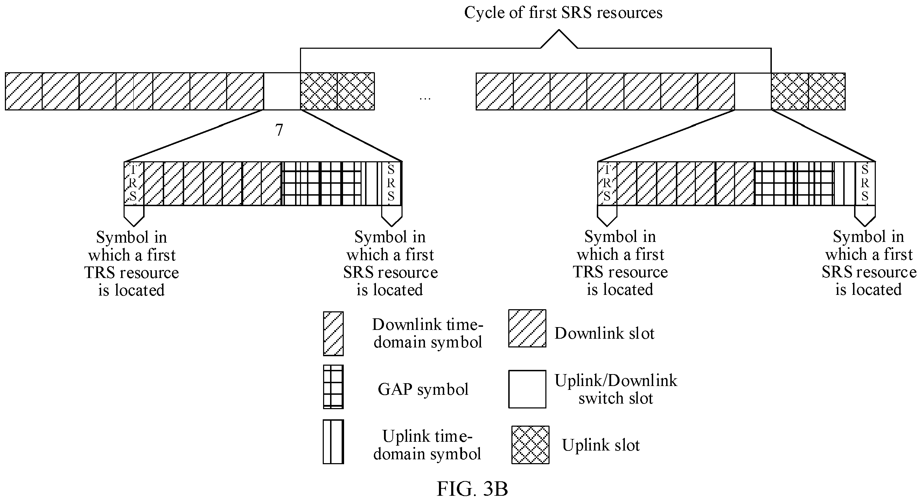

For example, as shown in FIG. 3B, the SRS resources configured based on the configuration information of the SRS include the plurality of first SRS resources. Each first SRS resource occupies one time-domain symbol in one uplink/downlink switch slot. A slot in which one first SRS resource is located may be understood as the sending occasion when the terminal device sends the SRS.

Optionally, the configuration information of the SRS includes cycle information of first SRS resources.

For example, as shown in FIG. 3A, a time interval between initial time-domain symbols occupied by two adjacent first SRS resources is 20 slots. In other words, it may be understood that a cycle of the first SRS resources is 20 slots.

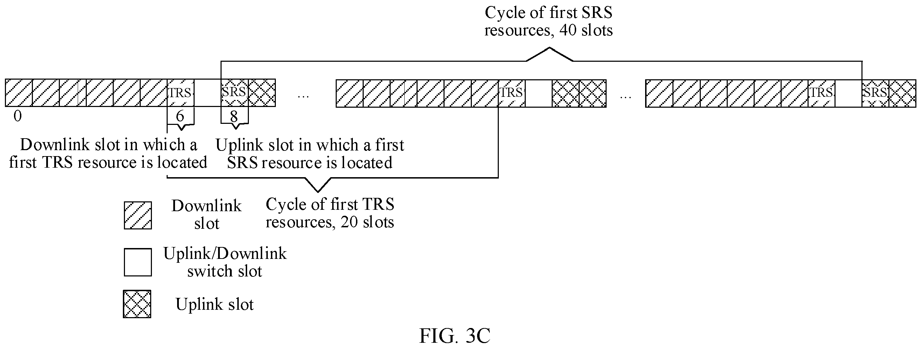

For example, as shown in FIG. 3C, a time interval between initial time-domain symbols occupied by two adjacent first SRS resources is 40 slots. In other words, it may be understood that a cycle of the first SRS resources is 40 slots.

It should be noted that, in addition to the plurality of first SRS resources, the SRS resources configured based on the configuration information of the SRS may further include another SRS resource of the terminal device. This is not specifically limited in this application. For example, the another SRS resource is a second SRS resource or a third SRS resource. The another SRS resource is similar to the first SRS resource. This is not described herein. For example, the second SRS resource is a periodic SRS resource, and a position relationship between the second SRS resource and a first TRS resource is similar to a position relationship between the first SRS resource and the first TRS resource. For details, refer to related descriptions of the position relationship between the first SRS resource and the first TRS resource in the following.

In a possible implementation, the access network device is a serving base station of the terminal device, and the access network device receives an SRS request message from a positioning device. The access network device determines the configuration information of the SRS for the terminal device based on the SRS request message. Alternatively, the SRS request message includes reference configuration information of an SRS recommended by the positioning device, and the access network device determines the configuration information of the SRS based on the reference configuration information of the SRS. For example, the positioning device is an LMF.

It should be noted that a ratio of a quantity of downlink slots to a quantity of uplink/downlink switch slots to a quantity of downlink slots in a communication system to which this application is applicable is not limited. In a schematic diagram of the first SRS resource and the first TRS resource in this application, an example in which the ratio of the quantity of downlink slots to the quantity of uplink/downlink switch slots to the quantity of uplink slots in the communication system may be 7:1:2 is used for description. An example in which the uplink/downlink switch slot includes two downlink time-domain symbols, four switch isolation (GAP) symbols, and eight uplink time-domain symbols is used for description. Specifically, a ratio of a quantity of downlink time-domain symbols to a quantity of GAP symbols to a quantity of uplink time-domain symbols that are in the uplink/downlink switch slot is not limited in this application.

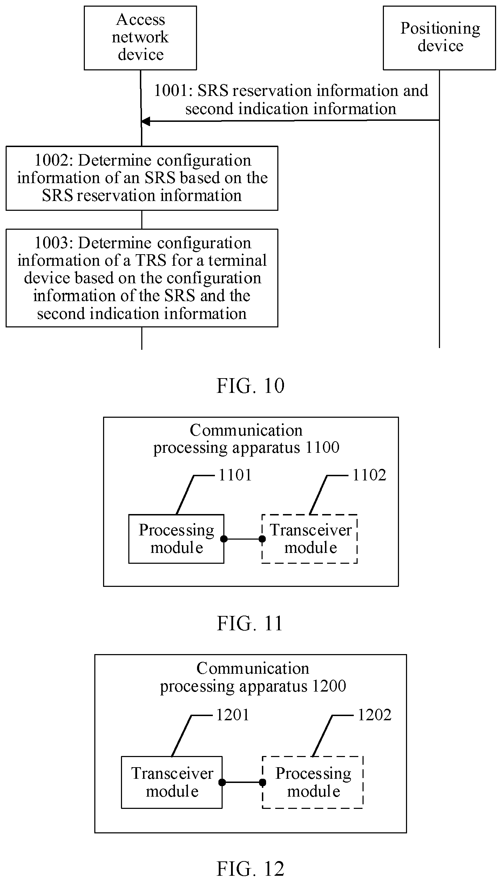

In another possible implementation, the access network device is a neighboring base station of the terminal device, and the access network device receives SRS resource reservation information from the positioning device. The access network device determines the configuration information of the SRS based on the SRS resource reservation information. For a specific determining process, refer to related descriptions in the embodiment shown in FIG. 10 below.

202: The access network device determines configuration information of a TRS for the terminal device.

The TRS is used by the terminal device to perform time-frequency tracking. For example, the access network device configures a channel state information reference signal (channel state information reference signal, CSI-RS) for the terminal device, where the CSI-RS is used by the terminal device to perform the time-frequency tracking.

The configuration information of the TRS is used to configure one or more first TRS resources. One first TRS resource occupies one or more time-domain symbols.

For example, as shown in FIG. 3A, a first TRS resource is located in a downlink slot. The first TRS resource may occupy one or more time-domain symbols in the downlink slot.

For example, as shown in FIG. 3B, a first TRS resource is located in an uplink/downlink switch slot, and the first TRS resource may occupy one time-domain symbol in the uplink/downlink switch slot.

It should be noted that a TRS resource configured based on the configuration information of the TRS includes one or more first TRS resources, and may further include another TRS resource of the terminal device. This is not specifically limited in this application. For example, the another TRS resource is a second TRS resource or a third TRS resource. The another TRS resource is similar to the first TRS resource. In this application, the first TRS resource is used as an example to describe the technical solutions of this application. For example, second TRS resources have a cycle, and the cycle of the second TRS resources may be the same as a cycle of the first TRS resources. One second TRS resource exists between two adjacent first SRS resources. In other words, a position relationship between the first SRS resource and the second TRS resource is similar to the position relationship between the first SRS resource and the first TRS resource. Details are not described herein again.

One first TRS resource exists between two adjacent first SRS resources in the SRS resources configured based on the configuration information of the SRS.

For example, as shown in FIG. 3A, the two adjacent first SRS resources configured based on the configuration information of the SRS are respectively located in a slot 8 and a slot 18. One first TRS resource exists between the two adjacent first SRS resources. As shown in FIG. 3A, a first TRS resource is located in a slot 16.

Optionally, one first TRS resource exists before an initial first SRS resource configured based on the configuration information of the SRS.

For example, before the first SRS resource, the terminal device is in a deep sleep mode. The terminal device needs to switch from the deep sleep mode to a micro sleep mode, to send the SRS carried in the first SRS resource. In this case, before the first SRS resource, the terminal device needs to perform downlink time-frequency tracking. Therefore, one first TRS resource may be configured before the initial first SRS resource, so that the terminal device performs the downlink time-frequency tracking.

It should be noted that there may be no TRS resource before the initial first SRS resource configured based on the configuration information of the SRS. For example, before the first SRS resource, the terminal device is in a connected state, in other words, the terminal device has implemented downlink time-frequency synchronization, and the TRS resource may not need to be configured before the first SRS resource.

Optionally, the cycle of the first SRS resources is a positive integer multiple of the cycle of the first TRS resources.

For example, as shown in FIG. 3A, the time interval between the initial time-domain symbols respectively occupied by the two adjacent first SRS resources is 20 slots, and a time interval between initial time-domain symbols occupied by two adjacent first TRS resources is also 20 slots. In other words, the cycle of the first SRS resources is the same as the cycle of the first TRS resources.

For example, as shown in FIG. 3C, the time interval between the initial time-domain symbols occupied by the two adjacent first SRS resources is 40 slots, and a time interval between initial time-domain symbols occupied by two adjacent first TRS resources is 20 slots. In other words, the cycle of the first SRS resources is twice the cycle of the first TRS resources.

In some implementations, the SRS resources configured based on the configuration information of the SRS include the plurality of first SRS resources. The following describes several possible position relationships between the plurality of first SRS resources and the first TRS resource.

1. At least one first SRS resource of the plurality of first SRS resources configured based on the configuration information of the SRS is located in an uplink/downlink switch slot, and one first TRS resource exists in the uplink/downlink switch slot in which the first SRS resource exists.

In some implementations, each first SRS resource of the plurality of first SRS resources is located in an uplink/downlink switch slot, and one first TRS resource exists in the uplink/downlink switch slot in which the first SRS resource exists.

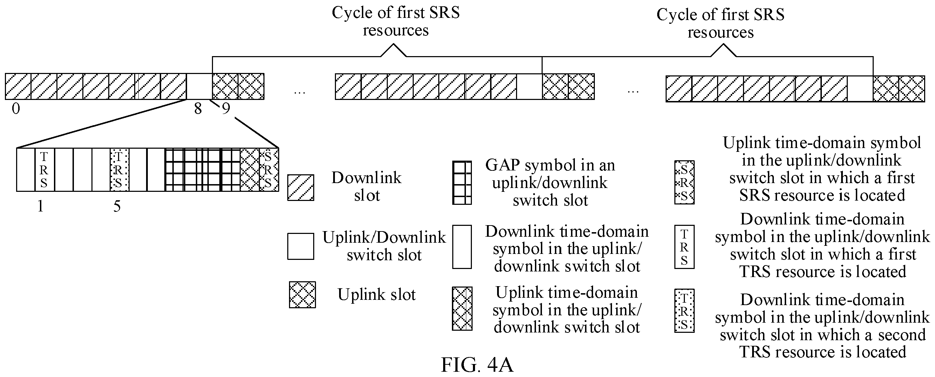

For example, as shown in FIG. 4A, each first SRS resource is located in an uplink/downlink switch slot, and the first SRS resource occupies a last time-domain symbol in the uplink/downlink switch slot. As shown in FIG. 4A, a slot 8 is an uplink/downlink switch slot, a first SRS resource is located in the slot 8, and a first TRS resource occupies a time-domain symbol 1 in the slot 8.

Optionally, the first TRS resource and the second TRS resource are two adjacent TRS resources configured based on the configuration information of the TRS. There may be one or more time-domain symbols between the first TRS resource and the second TRS resource, to improve accuracy of time-frequency synchronization performed by the terminal device.

For example, as shown in FIG. 4A, the first TRS resource is located in the time-domain symbol 1 in the slot 8, and a second TRS resource is located in a time-domain symbol 5 in the slot 8. There are three time-domain symbols between the time-domain symbol 1 and the time-domain symbol 5. This is conductive for the terminal device to separately receive the TRS on the first TRS resource and the second TRS resource, so that the accuracy of the time-frequency synchronization performed by the terminal device is improved.

After the terminal device switches from the deep sleep (deep sleep) mode to the micro sleep (micro sleep) mode, the terminal device implements the downlink time-frequency synchronization by using the TRS received on the first TRS resource. The terminal device maintains in the micro sleep mode. The terminal device may send the SRS by using the first SRS resource at a moment (that is, a slot in which the first SRS resource is located) at which the SRS is sent, to implement positioning of the terminal device. After the terminal device sends the SRS, the terminal device may enter the deep sleep mode. The first SRS resource and the first TRS resource are located in a same uplink/downlink switch slot. Therefore, time spent by the terminal device in maintaining in the micro sleep mode and waiting to send the SRS is short. For example, in the example shown in FIG. 4A, time spent by the terminal device in maintaining in the micro sleep mode and waiting to send the SRS is 11 time-domain symbols. In this way, time spent by the terminal device in maintaining in the micro sleep mode is reduced, and power consumption of the terminal device is reduced, thereby improving a battery life of the terminal device.

2. At least one first SRS resource of the plurality of first SRS resources is located in an uplink slot, and one first TRS resource exists in an N^{th} downlink slot before the uplink slot in which the first SRS resource exists. N is an integer greater than or equal to 1.

In some implementations, each first SRS resource of the plurality of first SRS resources is located in an uplink slot, and one first TRS resource exists in the N^{th} downlink slot before the uplink slot in which the first SRS resource exists.

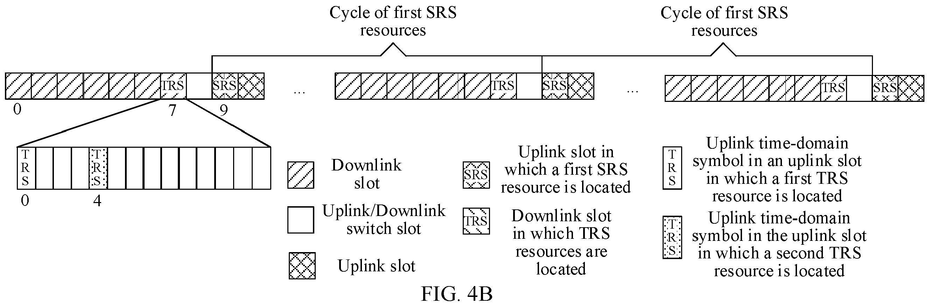

For example, as shown in FIG. 4B, each first SRS resource is located in an uplink slot, and occupies some time-domain symbols or all time-domain symbols of the uplink slot. As shown in FIG. 4B, a slot 9 is an uplink slot, a first SRS resource is located in the slot 9, a 1^{st} downlink slot before the slot 9 is a slot 7, and a first TRS resource is located in a time-domain symbol 0 in the slot 7.

Optionally, the first TRS resource and the second TRS resource are two adjacent TRS resources configured based on the configuration information of the TRS. There may be one or more time-domain symbols between the first TRS resource and the second TRS resource, to improve accuracy of time-frequency synchronization performed by the terminal device.

For example, as shown in FIG. 4B, the first TRS resource is located in the time-domain symbol 0 in the slot 7. A second TRS resource is located in a time-domain symbol 4 in the slot 7. There are three time-domain symbols between the time-domain symbol 0 and the time-domain symbol 4.

After the terminal device switches from the deep sleep mode to the micro sleep mode, the terminal device implements the downlink time-frequency synchronization by using the TRS received on the first TRS resource. The terminal device maintains in the micro sleep mode. The terminal device may send the SRS by using the first SRS resource at a moment (that is, a slot in which the first SRS resource is located) at which the SRS is sent, to implement positioning of the terminal device. After the terminal device sends the SRS, the terminal device may enter the deep sleep mode. The first SRS resource is located in the uplink slot, and the first TRS resource is located in the N^{th} downlink slot before the uplink slot. Therefore, time spent by the terminal device in maintaining in the micro sleep mode and waiting to send the SRS is short. For example, in the example shown in FIG. 4B, after the terminal device completes the downlink time-frequency synchronization, the terminal device is in the micro sleep mode in an uplink/downlink switch slot, and can quickly send the SRS on the first SRS resource. In this way, time spent by the terminal device in maintaining in the micro sleep mode is reduced, and power consumption of the terminal device is reduced, thereby improving a battery life of the terminal device.

3. At least one first SRS resource of the plurality of first SRS resources is located in an uplink slot, and one first TRS resource exists in an N^{th} uplink/downlink switch slot before the uplink slot in which the first SRS resource exists. N is an integer greater than or equal to 1.

In some implementations, each first SRS resource of the plurality of first SRS resources is located in an uplink slot, and one first TRS resource exists in a 1^{st} uplink/downlink switch slot before the uplink slot in which the first SRS resource exists.

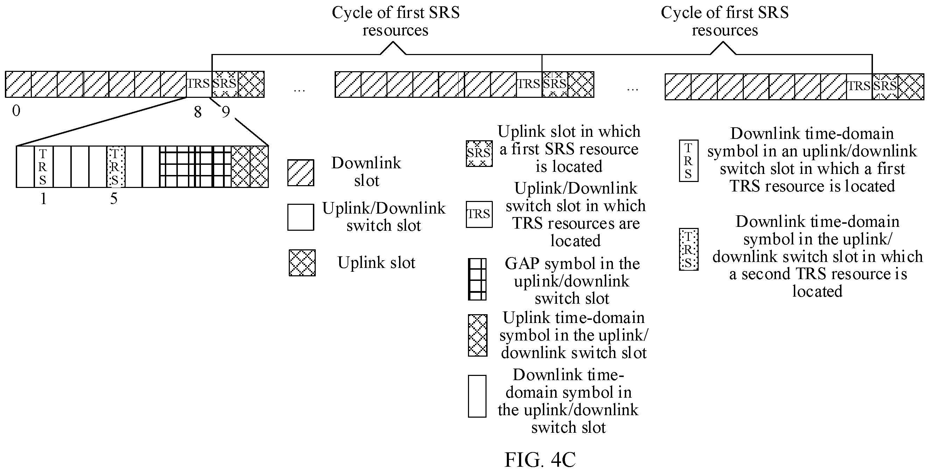

For example, as shown in FIG. 4C, each first SRS resource is located in an uplink slot, and occupies some time-domain symbols or all time-domain symbols of the uplink slot. As shown in FIG. 4C, a slot 9 is an uplink slot, a first SRS resource is located in the slot 9, a 1^{st} uplink/downlink switch slot before the slot 9 is a slot 8, and a first TRS resource is located in a time-domain symbol 1 in the slot 8.

Optionally, the first TRS resource and the second TRS resource are two adjacent TRS resources configured based on the configuration information of the TRS. There may be one or more time-domain symbols between the first TRS resource and the second TRS resource, to improve accuracy of time-frequency synchronization performed by the terminal device. For example, as shown in FIG. 4C, the first TRS resource is located in the time-domain symbol 1 in the slot 8 slot 8, and a second TRS resource is located in a time-domain symbol 5 in the slot 8. There are three time-domain symbols between the time-domain symbol 1 and the time-domain symbol 5.

After the terminal device switches from the deep sleep mode to the micro sleep mode, the terminal device implements the downlink time-frequency synchronization by using the TRS received on the first TRS resource. The terminal device maintains in the micro sleep mode. The terminal device may send the SRS by using the first SRS resource at a moment (that is, a slot in which the first SRS resource is located) at which the SRS is sent, to implement positioning of the terminal device. After the terminal device sends the SRS, the terminal device may enter the deep sleep mode. The first SRS resource is located in the uplink slot, and the first TRS resource is located in the N^{th} uplink/downlink switch slot before the uplink slot. Therefore, time spent by the terminal device in maintaining in the micro sleep mode and waiting to send the SRS is short. For example, in the example shown in FIG. 4C, after the terminal device completes the downlink time-frequency synchronization, the terminal device is in the micro sleep mode in 13 time-domain symbols, and can quickly send the SRS on the first SRS resource. In this way, time spent by the terminal device in maintaining in the micro sleep mode is reduced, and power consumption of the terminal device is reduced, thereby improving a battery life of the terminal device.

4. At least one first SRS resource of the plurality of first SRS resources is located in an uplink/downlink switch slot, and one first TRS resource exists in an N^{th} downlink slot before the uplink slot in which the first SRS resource exists.

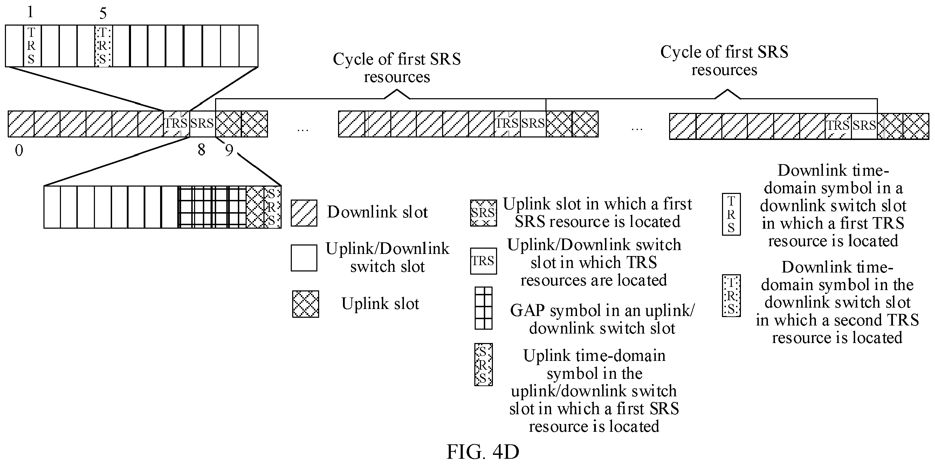

For example, as shown in FIG. 4D, each first SRS resource is located in an uplink slot, and occupies some time-domain symbols or all time-domain symbols of the uplink slot. As shown in FIG. 4D, a slot 8 is an uplink/downlink switch slot, a first SRS resource is located in the slot 8, a 1^{st} downlink slot before the slot 8 is a slot 7, and a first TRS resource is located in a time-domain symbol 1 in the slot 7.

It should be noted that, optionally, the TRS resource configured based on the configuration information of the TRS may be located in a plurality of downlink slots before the uplink slot in which the first SRS resource exists.

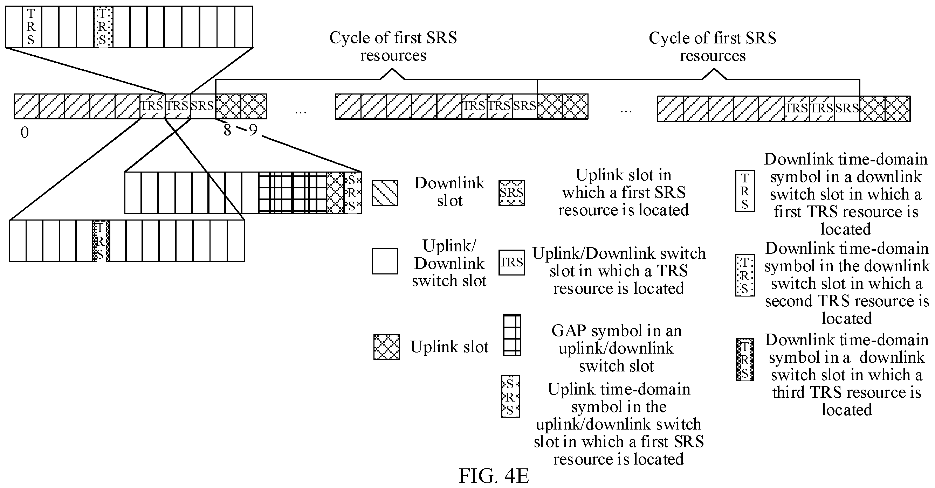

For example, as shown in FIG. 4E, a slot 7 is an uplink/downlink switch slot, a first SRS resource is located in the slot 7, one first TRS resource and one second TRS resource exists in a 1^{st} downlink slot (namely, a slot 6) before the slot 7, the first TRS resource is located in a time-domain symbol 2 in the slot 6, and the second TRS resource is located in a time-domain symbol 5 in the slot 6. One third TRS resource exists in a 2^{nd} downlink slot (namely, a slot 5) before the slot 7. In this way, accuracy of time-frequency synchronization performed by the terminal device is improved.

After the terminal device switches from the deep sleep mode to the micro sleep mode, the terminal device implements the downlink time-frequency synchronization by using the TRS received on the first TRS resource. The terminal device maintains in the micro sleep mode. The terminal device may send the SRS by using the first SRS resource at a moment (that is, a slot in which the first SRS resource is located) at which the SRS is sent, to implement positioning of the terminal device. After the terminal device sends the SRS, the terminal device may enter the deep sleep mode. The first SRS resource is located in the uplink/downlink switch slot, and the first TRS resource is located in the N^{th} downlink slot before the uplink/downlink switch slot. Therefore, time spent by the terminal device in maintaining in the micro sleep mode and waiting to send the SRS is short. For example, in the example shown in FIG. 4D, after the terminal device completes the downlink time-frequency synchronization, the terminal device is in the micro sleep mode in several time-domain symbols, and can quickly send the SRS on the first SRS resource. In this way, time spent by the terminal device in maintaining in the micro sleep mode is reduced, and power consumption of the terminal device is reduced, thereby improving a battery life of the terminal device.

With reference to the foregoing related descriptions of the configuration information of the SRS and the configuration information of the TRS, it can be learned that the position relationship between the first SRS resource and the first TRS resource and a relationship between the cycle of the first SRS resources and the cycle of the first TRS resources may be understood as association between the SRS resource and the TRS resource of the terminal device.

In some implementations, the terminal device determines the configuration information of the TRS for the terminal device based on the configuration information of the SRS.

Specifically, the terminal device may determine the configuration information of the TRS for the terminal device based on the configuration information of the SRS, to implement association between the SRS resource and the first TRS resource that are of the terminal device.

Optionally, before step 202, if the access network device has configured a corresponding TRS for the terminal device, the access network device determines whether a TRS resource already configured for the terminal device is associated with the SRS resource configured based on the configuration information of the SRS. If the TRS resource is not associated with the SRS resource, the access network device performs step 202. Specifically, the access network device may determine, with reference to a position relationship between the SRS resource and the TRS resource and a relationship between a cycle of SRS resources and a cycle of TRS resources, whether the SRS resource is associated with the TRS resource. It should be noted that if the SRS resource is associated with the TRS resource, the access network device does not need to redetermine the configuration information of the TRS for the terminal device.

Optionally, the embodiment shown in FIG. 2 further includes step 201a, and step 201a may be performed before step 201.

201a: The access network device determines that a type of the terminal device is an LPHAP terminal device.

The LPHAP terminal device has a low-power high-accuracy positioning function. Compared with a common terminal device (that is, a non-LPHAP terminal device), the LPHAP terminal device has a low-power or long battery life capability. Alternatively, the LPHAP terminal device has a low-power positioning requirement or a long battery life requirement. The non-LPHAP terminal device may not have the low-power or long battery life capability. Alternatively, the non-LPHAP terminal device does not have the low-power positioning requirement or the long battery life requirement.

Optionally, the low-power or long battery life capability includes: The terminal device can enter the deep sleep mode, and in the deep sleep mode, the terminal device only needs to maintain an extremely low clock current.

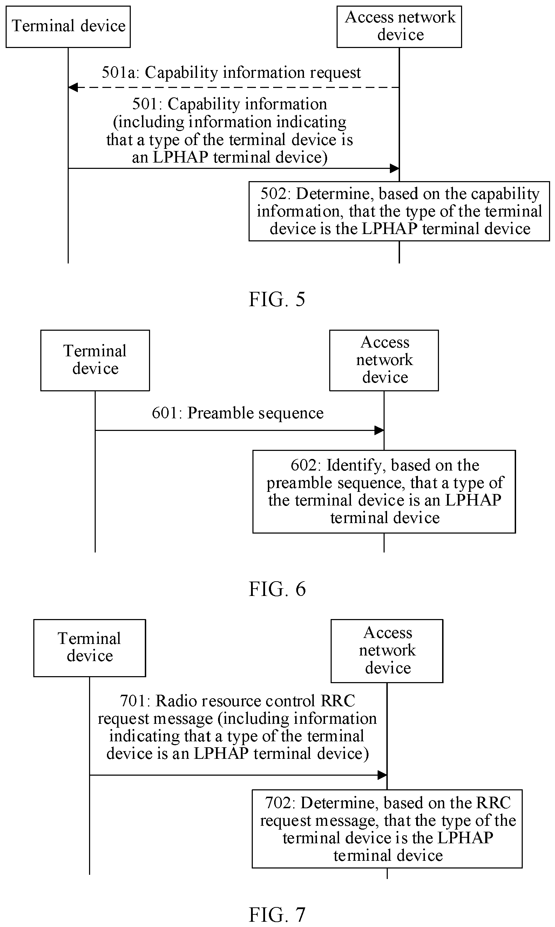

There is a plurality of determining manners for step 201a. For details, refer to the following related descriptions in FIG. 5 to FIG. 9.

After the access network device determines that the terminal device is the LPHAP terminal device, the access network device may determine the configuration information of the TRS for the terminal device based on the configuration information of the SRS.

Optionally, the embodiment shown in FIG. 2 further includes step 203. Step 203 may be performed before step 201.

203: The access network device sends the configuration information of the SRS and the configuration information of the TRS to the terminal device.

For related descriptions of the configuration information of the SRS and the configuration information of the TRS, refer to related descriptions in step 201 and step 202. Details are not described herein again.

For example, the access network device is the serving base station of the terminal device, and the access network device sends the configuration information of the SRS and the configuration information of the TRS to the terminal device. The access network device may send the configuration information of the SRS and the configuration information of the TRS to the terminal device by using a same message or different messages. For example, the access network device sends the configuration information of the SRS and the configuration information of the TRS to the terminal device by using a same radio resource control (radio resource control, RRC) message.

204: The terminal device receives the TRS based on the configuration information of the TRS.

For example, as shown in FIG. 4A, the terminal device receives the TRS from the access network device on the time-domain symbol 1 in the slot 8 (the uplink/downlink switch slot), and performs the downlink time-frequency tracking by using the TRS, to implement the downlink time-frequency synchronization of the terminal device.

Optionally, the terminal device may receive the TRS from the access network device on the time-domain symbol 5 in the slot 8, to ensure the downlink time-frequency synchronization of the terminal device.

205: The terminal device sends the SRS based on the configuration information of the SRS.

For example, as shown in FIG. 4A, the terminal device sends the SRS to the access network device on a time-domain symbol 13 in the slot 8, to perform the positioning of the terminal device.

In this embodiment of this application, the access network device determines the configuration information of the SRS of the terminal device, and the access network device determines the configuration information of the TRS for the terminal device. The configuration information of the TRS is used to configure the one or more first TRS resources, and one first TRS resource exists between two adjacent first SRS resources in the SRS resources configured based on the configuration information of the SRS. It can be learned that one first TRS resource exists between two adjacent first SRS resources in the SRS resources configured based on the configuration information of the SRS. The terminal device switches from the deep sleep mode to the micro sleep mode, and the terminal device implements the time-frequency tracking by using the TRS received on the first TRS resource. The terminal device maintains in the micro sleep mode. The terminal device may send the SRS on a first SRS resource after the first TRS resource, to implement the positioning of the terminal device. After sending the SRS, the terminal device may enter the deep sleep mode. One first TRS resource exists between two adjacent first SRS resources. After implementing the time-frequency synchronization by using the TRS received on the first TRS resource, the terminal device may send the SRS in a short time. This reduces the time spent by the terminal device in maintaining in the micro sleep mode, and prevents the terminal device from wasting unnecessary power consumption, thereby reducing the power consumption of the terminal device. In this way, the battery life of the terminal device is improved.

With reference to FIG. 5 to FIG. 7, the following describes several possible implementations in which the access network device determines that the type of the terminal device is the LPHAP terminal device.

FIG. 5 is a schematic diagram of another embodiment of a communication processing method according to an embodiment of this application. Refer to FIG. 5. The communication processing method includes the following steps.

Step 501: A terminal device sends capability information of the terminal device to an access network device. Correspondingly, the access network device receives the capability information from the terminal device.

The capability information includes information indicating that a type of the terminal device is an LPHAP terminal device.

For example, the terminal device sends a capability information (UE capability information) report message to the access network device, where the capability information report message includes indication information indicating that the type of the terminal device is the LPHAP terminal device.

Optionally, the embodiment shown in FIG. 5 further includes step 501a, and step 501a is performed before step 501.

501a: The access network device sends a capability information request to the terminal device. Correspondingly, the terminal device receives the capability information request from the access network device.

For example, the access network device sends a capability information request (UE capability enquiry) message to the terminal device, to request the capability information from the terminal device.

502: The access network device determines, based on the capability information, that the type of the terminal device is the LPHAP terminal device.

Specifically, the access network device determines, based on the information indicating that the type of the terminal device is the LPHAP terminal device, that the terminal device is the LPHAP terminal device.

It can be learned that FIG. 5 shows an example of an implementation in which the access network device determines that the terminal device is the LPHAP terminal device. The terminal device may indicate, to the access network device based on the capability information, that the type of the terminal device is the LPHAP terminal device, and does not need to indicate, to the access network device by defining a new message, that the type of the terminal device is the LPHAP terminal device. This improves applicability of the solution.

FIG. 6 is a schematic diagram of another embodiment of a communication processing method according to an embodiment of this application. Refer to FIG. 6. The communication processing method includes the following steps.

601: A terminal device sends a preamble sequence (random access) to an access network device. Correspondingly, the access network device receives the preamble sequence from the terminal device.

The preamble sequence is used by the terminal device to initiate random access to the access network device.

Specifically, the terminal device initiates the random access to the access network device by using a reserved preamble sequence. The reserved preamble sequence is used by an LPHAP terminal device to initiate random access. The access network device may determine, based on the reserved preamble sequence, that the terminal device is the LPHAP terminal device.

For example, there are 64 preamble sequences in a cell, a common terminal device initiates random access by using 50 preamble sequences, and the LPHAP terminal device initiates the random access by using remaining 14 preamble sequences. It can be learned that the access network device may determine, by identifying the preamble sequence, whether the terminal device is the LPHAP terminal device.

602: The access network device identifies, based on the preamble sequence, that a type of the terminal is the LPHAP terminal device.

It can be learned that FIG. 6 shows an example of another implementation in which the access network device determines that the terminal device is the LPHAP terminal device. The access network device determines, based on the preamble sequence used by the terminal device to initiate the random access, that the terminal device is the LPHAP terminal device. There is no need to redefine a new message to send indication information.

FIG. 7 is a schematic diagram of another embodiment of a communication processing method according to an embodiment of this application. Refer to FIG. 7. The communication processing method includes the following steps.

701: A terminal device sends an RRC request message to an access network device. The RRC request message includes information indicating that a type of the terminal device is an LPHAP terminal device. Correspondingly, the access network device receives the RRC request message from the terminal device.

In some implementations, the RRC request message may be an RRC setup request (RRC setup request) message or an RRC resume setup request (RRC resume request) message.

For example, the RRC setup request message is a message 3 (Msg3) in a four-step random access process, or a message 2 (Msg2) in a two-step random access process. This is not specifically limited in this application.

Optionally, the RRC setup request message includes indication information indicating that the type of the terminal device is the LPHAP terminal device. Alternatively, the RRC setup request message includes a cause value, and the cause value is a low-power positioning request. The cause value indicates the terminal device to initiate RRC setup to perform low-power positioning.

702: The access network device determines, based on the RRC request message, that the type of the terminal device is the LPHAP terminal device.

The access network device determines, based on the information that is carried in the RRC request message and that indicates that the type of the terminal device is the LPHAP terminal device, that the terminal device is the LPHAP terminal device.

It can be learned that FIG. 7 shows an example of another implementation in which the access network device determines that the terminal device is the LPHAP terminal device. The terminal device indicates, to the access network device in an RRC request process, that the terminal device is the LPHAP terminal device.

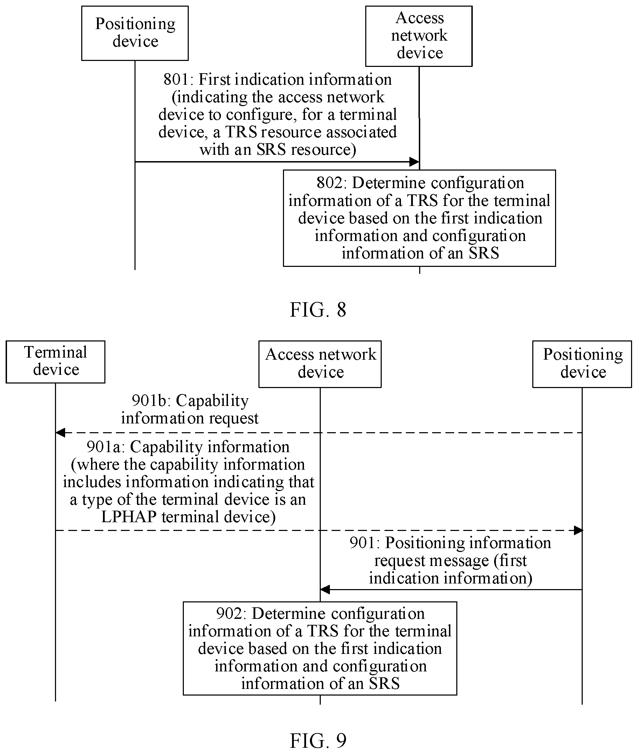

With reference to FIG. 8 to FIG. 10, the following describes two possible implementations that are of step 202 in the embodiment shown in FIG. 2 and in which an access network device determines configuration information of a TRS for the terminal device.

FIG. 8 is a schematic diagram of another embodiment of a communication processing method according to an embodiment of this application. Refer to FIG. 8. The communication processing method includes the following steps.

801: A positioning device sends first indication information to an access network device, where the first indication information indicates the access network device to configure, for a terminal device, a TRS resource associated with an SRS resource.

For association between the SRS resource and the TRS resource, refer to related descriptions in step 201. Details are not described herein again. The positioning device may be an LMF.

In step 801, the access network device may be a serving base station of the terminal device. The first indication information may be carried in a positioning information request message or carried in a measurement request message. For a related process in which the first indication information is carried in the positioning information request message, refer to related descriptions in FIG. 9 below.

802: The access network device determines configuration information of a TRS for the terminal device based on the first indication information and configuration information of an SRS.

Specifically, after the access network device receives the first indication information, the access network device may determine to configure, for the terminal device, the TRS resource associated with the SRS resource. The access network device determines the configuration information of the TRS for the terminal device based on the configuration information of the SRS. In this way, the association between the SRS resource and the TRS resource that are of the terminal device is implemented.

FIG. 9 is a schematic diagram of another embodiment of a communication processing method according to an embodiment of this application. Refer to FIG. 9. The communication processing method includes the following steps.

901: A positioning device sends a positioning information request message to an access network device. Correspondingly, the access network device receives the positioning information request message from the positioning device.

The positioning information request message includes first indication information. For related descriptions of the first indication information, refer to related descriptions in step 801 in the embodiment shown in FIG. 8. Details are not described herein again. For example, the positioning device is an LMF.

Optionally, the embodiment shown in FIG. 9 further includes step 901a. Step 901a may be performed before step 901.

901a: A terminal device sends capability information to the positioning device. The capability information includes information indicating that a type of the terminal device is an LPHAP terminal device. Correspondingly, the positioning device receives the capability information from the terminal device.

Specifically, the terminal device sends a capability information report message to the positioning device by using the access network device. The capability information report message includes the information indicating that the type of the terminal device is the LPHAP terminal device.

Optionally, the embodiment shown in FIG. 9 further includes step 901b, and step 901b may be performed before step 901a.

901b: The positioning device sends a capability information request to the terminal device. Correspondingly, the terminal device receives the capability information request from the positioning device.

The capability information request requests the capability information from the terminal device.

Specifically, the positioning device sends a capability information request message to the terminal device by using the access network device, where the capability information request message requests the capability information of the terminal device.

902: The access network device determines configuration information of a TRS for the terminal device based on the first indication information and configuration information of an SRS.

Step 902 is similar to step 802 in the embodiment shown in FIG. 8. For details, refer to the related descriptions in step 802 in the embodiment shown in FIG. 8. Details are not described herein again.

In this application, optionally, the access network device is a neighboring base station of the terminal device. Optionally, with reference to an embodiment shown in FIG. 10, the following describes a possible implementation in which the access network device determines the configuration information of the SRS and the configuration of the TRS.

FIG. 10 is a schematic diagram of another embodiment of a communication processing method according to an embodiment of this application. Refer to FIG. 10. The communication processing method includes the following steps.

1001: A positioning device sends SRS resource reservation information and second indication information to an access network device.

The second indication information indicates the access network device to configure, for the terminal device, a TRS resource associated with an SRS resource corresponding to the SRS resource reservation information. For example, the positioning device is an LMF.

Optionally, the SRS resource reservation information includes configuration information of an SRS resource of the terminal device.

Specifically, the access network device is a neighboring base station of the terminal device, and the positioning device may send new radio positioning protocol A (new radio positioning protocol A, NRPPa) signaling to the neighboring base station, where the NRPPa signaling includes the SRS resource reservation information and the second indication information.

1002: The access network device determines configuration information of an SRS based on the SRS resource reservation information.

In a possible implementation, the access network device may use the configuration information that is of the SRS resource and that is in the SRS resource reservation information as the configuration information of the SRS of the terminal device.

In another possible implementation, the access network device may configure the configuration information of the SRS for the terminal device based on the configuration information that is of the SRS resource and that is in the SRS resource reservation information.

1003: The access network device determines configuration information of a TRS for the terminal device based on the configuration information of the SRS and the second indication information.

The access network device identifies, by using the second indication information, that the terminal device is an LPHAP terminal device. The access network device may determine the configuration information of the TRS for the terminal device based on the configuration information of the SRS, to implement association between the SRS resource and the TRS resource that are of the terminal device.

It should be noted that the access network device is the neighboring base station of the terminal device. After the access network device determines the configuration information of the SRS and the configuration information of the TRS for the terminal device, the access network device may send the configuration information of the SRS and the configuration information of the TRS to the terminal device by using another device.

In the foregoing technical solution, the neighboring base station configures the configuration information of the SRS for the terminal device, and the neighboring base station determines the configuration information of the TRS for the terminal device based on the configuration information of the SRS and the second indication information. In this way, association between a first SRS resource and a first TRS resource that are of the terminal device is implemented. After the terminal device moves from a serving cell to a neighboring cell, the terminal device does not need to re-access a network to apply for the TRS resource, and may perform downlink time-frequency synchronization by using a first TRS resource configured by the neighboring cell. The terminal device enters a micro sleep mode, and the terminal device may implement time-frequency tracking by using the TRS received on the first TRS resource. Then, the terminal device may send the SRS on a first SRS resource after the first TRS resource, to implement positioning of the terminal device. After sending the SRS, the terminal device may enter a deep sleep mode. One first TRS resource exists between two adjacent first SRS resources. After implementing the time-frequency synchronization, the terminal device may send the SRS in a short time. This reduces time spent by the terminal device in maintaining in the micro sleep mode, and reduces power consumption overheads of the terminal device. In this way, a battery life of the terminal device is improved.

The following describes a communication processing apparatus provided in an embodiment of this application. FIG. 11 is a schematic diagram of a structure of a communication processing apparatus according to an embodiment of this application. The communication processing apparatus may be configured to perform the steps performed by the access network device in the embodiments shown in FIG. 2, FIG. 5, FIG. 6, FIG. 7, FIG. 8, FIG. 9, and FIG. 10. For details, refer to related descriptions in the foregoing method embodiments.

The communication processing apparatus 1100 includes a processing module 1101. Optionally, the communication processing apparatus 1100 further includes a transceiver module 1102.

The processing module 1101 is configured to: determine configuration information of an SRS of a terminal device; and determine configuration information of a TRS for the terminal device, where the configuration information of the TRS is used to configure one or more first TRS resources, and one first TRS resource exists between two adjacent first SRS resources in SRS resources configured based on the configuration information of the SRS.

In a possible implementation, one first TRS resource exists before an initial first SRS resource configured based on the configuration information of the SRS.

In another possible implementation, the transceiver module 1102 is configured to send the configuration information of the SRS and the configuration information of the TRS to the terminal device.

In another possible implementation, a cycle of first SRS resources is a positive integer multiple of a cycle of first TRS resources.

In another possible implementation, at least one first SRS resource of a plurality of first SRS resources configured based on the configuration information of the SRS is located in an uplink/downlink switch slot, and one first TRS resource exists in the uplink/downlink switch slot in which the first SRS resource exists;
at least one first SRS resource of a plurality of first SRS resources is located in an uplink slot, and one first TRS resource exists in an N^{th} downlink slot before the uplink slot in which the first SRS resource exists, where N is a positive integer;
at least one first SRS resource of a plurality of first SRS resources is located in an uplink slot, and one first TRS resource exists in an N^{th} uplink/downlink switch slot before the uplink slot in which the first SRS resource exists; or
at least one first SRS resource of a plurality of first SRS resources is located in an uplink/downlink switch slot, and one first TRS resource exists in an N^{th} downlink slot before the uplink/downlink switch slot in which the first SRS resource exists.

In another possible implementation, the processing module 1101 is further configured to:
determine that a type of the terminal device is an LPHAP terminal device.

In another possible implementation, the processing module 1101 is specifically configured to:
receive capability information of the terminal device, where the capability information includes information about the terminal device whose type is the LPHAP terminal device.

In another possible implementation, the processing module 1101 is specifically configured to:
receive a preamble sequence from the terminal device, where the preamble sequence is used by the terminal device to initiate random access to the communication processing apparatus; and identify, based on the preamble sequence, that the type of the terminal device is the LPHAP terminal device.

In another possible implementation, the processing module 1101 is specifically configured to:
receive an RRC request message from the terminal device, where the RRC request message includes information indicating that the type of the terminal device is the LPHAP terminal device.

In another possible implementation, the processing module 1101 is specifically configured to:
receive first indication information from a positioning device, where the first indication information indicates the communication processing apparatus to configure, for the terminal device, a TRS resource associated with the SRS resource; and
determine the configuration information of the TRS for the terminal device based on the first indication information and the configuration information of the SRS.

In another possible implementation, the processing module 1101 is specifically configured to:
receive a positioning information request message from the positioning device, where the positioning information request message includes the first indication information.

In another possible implementation, the processing module 1101 is specifically configured to:
receive SRS resource reservation information and second indication information that are from a positioning device, where the second indication information indicates the communication processing apparatus to configure a TRS resource associated with an SRS resource corresponding to the SRS resource reservation information;
determine the configuration information of the SRS based on the SRS resource reservation information; and
determine the configuration information of the TRS based on the configuration information of the SRS and the second indication information.

The following describes a communication processing apparatus provided in an embodiment of this application. FIG. 12 is a schematic diagram of a structure of a communication processing apparatus according to an embodiment of this application. The communication processing apparatus may be configured to perform the steps performed by the terminal device in the embodiments shown in FIG. 2, FIG. 5, FIG. 6, FIG. 7, and FIG. 9. For details, refer to related descriptions in the foregoing method embodiments.

The communication processing apparatus 1200 includes a transceiver module 1201. Optionally, the communication processing apparatus 1200 further includes a processing module 1202.

The transceiver module 1201 is configured to: receive configuration information of an SRS and configuration information of a TRS that are from an access network device, where the configuration information of the TRS is used to configure one or more first TRS resources, and one first TRS resource exists between two adjacent first SRS resources in SRS resources configured based on the configuration information of the SRS; receive the TRS based on the configuration information of the TRS; and send the SRS based on the configuration information of the SRS.

In a possible implementation, one first TRS resource exists before an initial first SRS resource configured based on the configuration information of the SRS.

In another possible implementation, a cycle of first SRS resources is a positive integer multiple of a cycle of first TRS resources.

In another possible implementation, at least one first SRS resource of a plurality of first SRS resources configured based on the configuration information of the SRS is located in an uplink/downlink switch slot, and one first TRS resource exists in the uplink/downlink switch slot in which the first SRS resource exists;
at least one first SRS resource of a plurality of first SRS resources is located in an uplink slot, and one first TRS resource exists in an N^{th} downlink slot before the uplink slot in which the first SRS resource exists, where N is a positive integer;
at least one first SRS resource of a plurality of first SRS resources is located in an uplink slot, and one first TRS resource exists in an N^{th} uplink/downlink switch slot before the uplink slot in which the first SRS resource exists; or
at least one first SRS resource of a plurality of first SRS resources is located in an uplink/downlink switch slot, and one first TRS resource exists in an N^{th} downlink slot before the uplink/downlink switch slot in which the first SRS resource exists.

In another possible implementation, the transceiver module 1201 is further configured to:
send capability information to the access network device, where the capability information includes information about a communication processing apparatus whose type is an LPHAP terminal device.

In another possible implementation, the transceiver module 1201 is further configured to:
send a preamble sequence to the access network device, where the preamble sequence is used by the communication processing apparatus to initiate random access to the access network device, and the preamble sequence indicates that a type of the communication processing apparatus is an LPHAP terminal device.

In another possible implementation, the transceiver module 1201 is further configured to:
send an RRC request message to the access network device, where the RRC request message includes information indicating that a type of the communication processing apparatus is an LPHAP terminal device.

In another possible implementation, the transceiver module 1201 is further configured to:
receive a capability request message from a positioning device; and
send capability information to the positioning device, where the capability information includes information indicating that a type of the communication processing apparatus is an LPHAP terminal device.

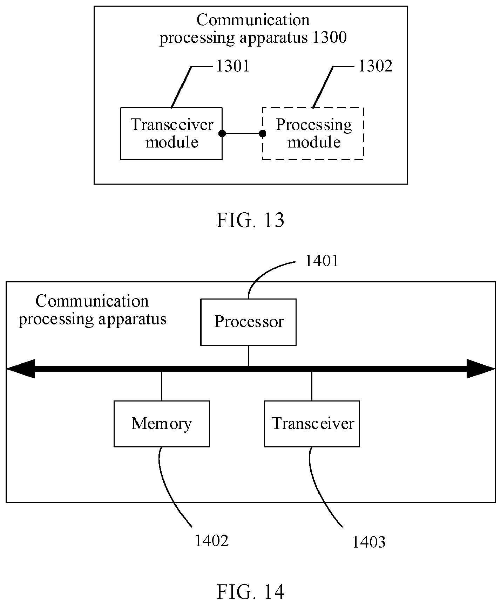

The following describes a communication processing apparatus provided in an embodiment of this application. FIG. 13 is a schematic diagram of a structure of a communication processing apparatus according to an embodiment of this application. The communication processing apparatus may be configured to perform the steps performed by the positioning device in the embodiments shown in FIG. 8, FIG. 9, and FIG. 10. For details, refer to related descriptions in the foregoing method embodiments.

The communication processing apparatus 1300 includes a transceiver module 1301. Optionally, the communication processing apparatus 1300 further includes a processing module 1302.

The transceiver module 1301 is configured to send first indication information to an access network device, where the first indication information indicates the access network device to configure, for a terminal device, a TRS resource associated with the SRS resource.

In a possible implementation, the transceiver module 1301 is specifically configured to:
send a positioning information request message to the access network device, where the positioning information request message includes the first indication information.

In a possible implementation, the transceiver module 1301 is further configured to:
send a capability request message to the terminal device; and
receive capability information from the terminal device, where the capability information includes information indicating that a type of the terminal device is an LPHAP terminal device.

Optionally, FIG. 13 may be further configured to perform the steps performed by the positioning device in the embodiment shown in FIG. 10. For details, refer to related descriptions in the foregoing method embodiments. Specifically, the transceiver module 1301 is configured to send SRS resource reservation information and second indication information to the access network device, where the second indication information indicates the access network device to configure, for the terminal device, a TRS resource matching an SRS resource corresponding to the SRS resource reservation information.

This application further provides a communication processing apparatus. FIG. 14 is a schematic diagram of another structure of a communication processing apparatus according to an embodiment of this application. The communication processing apparatus may be configured to perform the steps performed by the access network device in the embodiments shown in FIG. 2, FIG. 5, FIG. 6, FIG. 7, FIG. 8, FIG. 9, and FIG. 10. For details, refer to related descriptions in the foregoing method embodiments.

The communication processing apparatus includes a processor 1401 and a memory 1402. Optionally, the communication processing apparatus further includes a transceiver 1403.

In a possible implementation, the processor 1401, the memory 1402, and the transceiver 1403 are separately connected through a bus, and the memory stores computer instructions.

The processing module 1101 in the foregoing embodiment may specifically be the processor 1401 in this embodiment. Therefore, specific implementation of the processor 1401 is not described again. The transceiver module 1102 in the foregoing embodiment may specifically be the transceiver 1403 in this embodiment. Therefore, specific implementation of the transceiver 1403 is not described again.

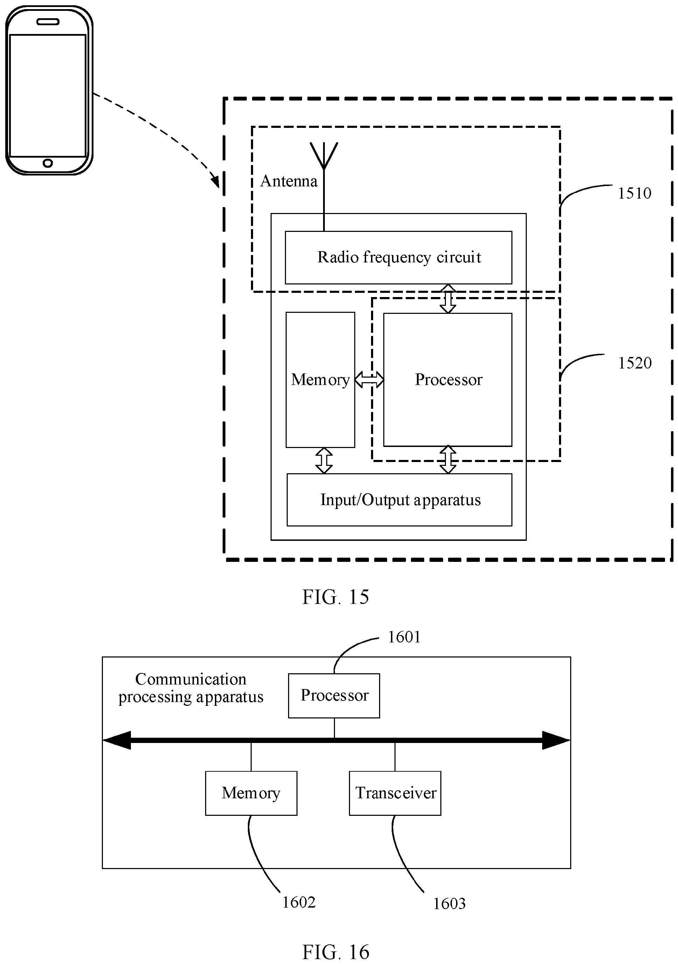

FIG. 15 is a schematic diagram of a possible structure in which a communication processing apparatus is a terminal device.

FIG. 15 is a schematic diagram of a simplified structure of a terminal device. For ease of understanding and illustration, an example in which the terminal device is a mobile phone is used in FIG. 15. As shown in FIG. 15, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user, and output data to the user. It should be noted that some types of terminal devices may have no input/output apparatus.

When data needs to be sent, after performing baseband processing on the to-be-sent data, the processor outputs a baseband signal to the radio frequency circuit. The radio frequency circuit performs radio frequency processing on the baseband signal and then sends a radio frequency signal to the outside in a form of an electromagnetic wave through the antenna. When data is sent to the terminal device, the radio frequency circuit receives the radio frequency signal through the antenna, converts the radio frequency signal into the baseband signal, and outputs the baseband signal to the processor. The processor converts the baseband signal into data, and processes the data.

For ease of description, FIG. 15 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna having receiving and sending functions and the radio frequency circuit may be considered as a transceiver unit of the terminal device, and the processor having a processing function may be considered as a processing unit of the terminal device. As shown in FIG. 15, the terminal device includes a transceiver unit 1510 and a processing unit 1520. The transceiver unit may also be referred to as a transceiver, a transceiver machine, a transceiver apparatus, or the like. The processing unit may also be referred to as a processor, a processing board, a processing module, a processing apparatus, or the like.

Optionally, a component that is in the transceiver unit 1510 and that is configured to implement a receiving function may be considered as a receiving unit, and a component that is in the transceiver unit 1510 and that is configured to implement a sending function may be considered as a sending unit. In other words, the transceiver unit 1510 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receiver circuit, or the like. The sending unit sometimes may also be referred to as a transmitter machine, a transmitter, a transmitter circuit, or the like.

It should be understood that the transceiver unit 1510 is configured to perform a sending operation and a receiving operation of the terminal device in the foregoing method embodiments, and the processing unit 1520 is configured to perform an operation other than the receiving and sending operations of the terminal device in the foregoing method embodiments.

When the terminal device is a chip, the chip includes a transceiver unit and a processing unit. The transceiver unit may be an input/output circuit or a communication interface. The processing unit is a processor, a microprocessor, an integrated circuit, or a logic circuit integrated on the chip.

This application further provides a communication processing apparatus. FIG. 16 is a schematic diagram of another structure of a communication processing apparatus according to an embodiment of this application. The communication processing apparatus may be configured to perform the steps performed by the positioning device in the embodiments shown in FIG. 8, FIG. 9, and FIG. 10. For details, refer to related descriptions in the foregoing method embodiments.

The communication processing apparatus includes a processor 1601 and a memory 1602. Optionally, the communication processing apparatus further includes a transceiver 1603.

In a possible implementation, the processor 1601, the memory 1602, and the transceiver 1603 are separately connected through a bus, and the memory stores computer instructions.

The transceiver module 1301 in the foregoing embodiment may specifically be the transceiver 1603 in this embodiment. Therefore, specific implementation of the transceiver 1603 is not described again. The processing module 1302 in the foregoing embodiment may specifically be the processor 1601 in this embodiment. Therefore, specific implementation of the processor 1601 is not described again.

An embodiment of this application further provides a communication system. The communication system includes a terminal device, an access network device, and a positioning device. The terminal device is configured to perform all or some of the steps performed by the terminal device in the embodiments shown in FIG. 2, FIG. 5, FIG. 6, FIG. 7, and FIG. 9. The access network device is configured to perform all or some of the steps performed by the access network device in the embodiments shown in FIG. 2, FIG. 5, FIG. 6, FIG. 7, FIG. 8, FIG. 9, and FIG. 10. The positioning device is configured to perform all or some of the steps performed by the access network device in the embodiments shown in FIG. 8, FIG. 9, and FIG. 10.

An embodiment of this application further provides a computer program product including instructions. When the computer program product runs on a computer, the computer is enabled to perform the communication processing methods in the embodiments shown in FIG. 2, FIG. 5, FIG. 6, FIG. 7, FIG. 8, FIG. 9, and FIG. 10.

An embodiment of this application further provides a computer-readable storage medium, including computer instructions. When the computer instructions are run on a computer, the computer is enabled to perform the communication processing methods in the embodiments shown in FIG. 2, FIG. 5, FIG. 6, FIG. 7, FIG. 8, FIG. 9, and FIG. 10.

An embodiment of this application further provides a chip apparatus, including a processor configured to: be connected to a memory, and invoke a program stored in the memory, so that the processor performs the communication processing methods in the embodiments shown in FIG. 2, FIG. 5, FIG. 6, FIG. 7, FIG. 8, FIG. 9, and FIG. 10.

The processor mentioned anywhere above may be a general-purpose central processing unit, a microprocessor, an application-specific integrated circuit (application-specific integrated circuit, ASIC), or one or more integrated circuits configured to control program execution of the communication processing methods in the embodiments shown in FIG. 2, FIG. 5, FIG. 6, FIG. 7, FIG. 8, FIG. 9, and FIG. 10. The memory mentioned anywhere above may be a read-only memory (read-only memory, ROM), another type of static storage device that can store static information and instructions, a random access memory (random access memory, RAM), or the like.

It may be clearly understood by persons skilled in the art that, for a purpose of convenient and brief description, for a detailed working process of the foregoing system, apparatus, and unit, refer to a corresponding process in the foregoing method embodiments. Details are not described herein again.

In some embodiments provided in this application, it should be understood that the disclosed system, apparatus, and method may be implemented in another manner. For example, the described apparatus embodiments are merely examples. For example, division into the units is merely logic function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, a USB flash drive, a removable hard disk, a read-only memory (read-only memory, ROM), a random access memory (random access memory, RAM), a magnetic disk, an optical disc, and the like.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A communication processing method, wherein the method comprises:
determining, by an access network device, configuration information of a sounding reference signal SRS of a terminal device; and
determining, by the access network device, configuration information of a tracking reference signal TRS for the terminal device, wherein the configuration information of the TRS is used to configure one or more first TRS resources, and one first TRS resource exists between two adjacent first SRS resources in SRS resources configured based on the configuration information of the SRS.

2. The method according to claim 1, wherein one first TRS resource exists before an initial first SRS resource configured based on the configuration information of the SRS.

3. The method according to claim 1 or 2, wherein the method further comprises:
sending, by the access network device, the configuration information of the SRS and the configuration information of the TRS to the terminal device.

4. The method according to any one of claims 1 to 3, wherein a cycle of first SRS resources is a positive integer multiple of a cycle of first TRS resources.

5. The method according to any one of claims 1 to 4, wherein at least one first SRS resource of a plurality of first SRS resources configured based on the configuration information of the SRS is located in an uplink/downlink switch slot, and one first TRS resource exists in the uplink/downlink switch slot in which the first SRS resource exists;
at least one first SRS resource of a plurality of first SRS resources is located in an uplink slot, and one first TRS resource exists in an N^{th} downlink slot before the uplink slot in which the first SRS resource exists, wherein N is a positive integer;
at least one first SRS resource of a plurality of first SRS resources is located in an uplink slot, and one first TRS resource exists in an N^{th} uplink/downlink switch slot before the uplink slot in which the first SRS resource exists; or
at least one first SRS resource of a plurality of first SRS resources is located in an uplink/downlink switch slot, and one first TRS resource exists in an N^{th} downlink slot before the uplink/downlink switch slot in which the first SRS resource exists.

6. The method according to any one of claims 1 to 5, wherein the method further comprises:
determining, by the access network device, that a type of the terminal device is a low-power high-accuracy positioning LPHAP terminal device.

7. The method according to claim 6, wherein the determining, by the access network device, that a type of the terminal device is a low-power high-accuracy positioning LPHAP terminal device comprises:
receiving, by the access network device, capability information of the terminal device, wherein the capability information comprises information about the terminal device whose type is the low-power high-accuracy positioning LPHAP terminal device.

8. The method according to any one of claims 1 to 7, wherein the determining, by the access network device, configuration information of a tracking reference signal TRS for the terminal device comprises:
receiving, by the access network device, first indication information from a positioning device, wherein the first indication information indicates the access network device to configure, for the terminal device, a TRS resource associated with the SRS resource; and
determining, by the access network device, the configuration information of the TRS based on the configuration information of the SRS and the first indication information.

9. The method according to any one of claims 1 to 7, wherein the determining, by an access network device, configuration information of a sounding reference signal SRS of a terminal device comprises:
receiving, by the access network device, SRS resource reservation information and second indication information that are from a positioning device, wherein the second indication information indicates the access network device to configure a TRS resource associated with an SRS resource corresponding to the SRS resource reservation information; and
determining, by the access network device, the configuration information of the SRS based on the SRS resource reservation information; and
the determining, by the access network device, configuration information of a tracking reference signal TRS for the terminal device comprises:
determining, by the access network device, the configuration information of the TRS based on the configuration information of the SRS and the second indication information.

10. A communication processing method, wherein the method comprises:
receiving, by a terminal device, configuration information of a sounding reference signal SRS and configuration information of a tracking reference signal TRS that are from an access network device, wherein the configuration information of the TRS is used to configure one or more first TRS resources, and one first TRS resource exists between two adjacent first SRS resources in SRS resources configured based on the configuration information of the SRS;
receiving, by the terminal device, the TRS based on the configuration information of the TRS; and
sending, by the terminal device, the SRS based on the configuration information of the SRS.

11. The method according to claim 10, wherein one first TRS resource exists before an initial first SRS configured based on the configuration information of the SRS.

12. The method according to claim 10 or 11, wherein a cycle of first SRS resources is a positive integer multiple of a cycle of first TRS resources.

13. The method according to any one of claims 10 to 12, wherein at least one first SRS resource of a plurality of first SRS resources configured based on the configuration information of the SRS is located in an uplink/downlink switch slot, and one first TRS resource exists in the uplink/downlink switch slot in which the first SRS resource exists;
at least one first SRS resource of a plurality of first SRS resources is located in an uplink slot, and one first TRS resource exists in an N^{th} downlink slot before the uplink slot in which the first SRS resource exists, wherein N is a positive integer;
at least one first SRS resource of a plurality of first SRS resources is located in an uplink slot, and one first TRS resource exists in an N^{th} uplink/downlink switch slot before the uplink slot in which the first SRS resource exists; or
at least one first SRS resource of a plurality of first SRS resources is located in an uplink/downlink switch slot, and one first TRS resource exists in an N^{th} downlink slot before the uplink/downlink switch slot in which the first SRS resource exists.

14. The method according to any one of claims 10 to 13, wherein the method further comprises:
sending, by the terminal device, capability information to the access network device or a positioning device, wherein the capability information comprises information about a terminal device whose type is a low-power high-accuracy positioning LPHAP terminal device.

15. A communication processing method, wherein the method comprises:
sending, by a positioning device, first indication information to an access network device, wherein the first indication information indicates the access network device to configure, for a terminal device, a tracking reference signal TRS resource associated with a sounding reference signal SRS resource.

16. The method according to claim 15, wherein the method further comprises:
receiving, by the positioning device, capability information from the terminal device, wherein the capability information comprises information about a terminal device whose type is a low-power high-accuracy positioning LPHAP terminal device.

17. A communication processing method, wherein the method comprises:
sending, by a positioning device, sounding reference signal SRS resource reservation information and second indication information to an access network device, wherein the second indication information indicates the access network device to configure, for a terminal device, a TRS resource matching an SRS resource corresponding to the SRS resource reservation information.

18. A communication processing apparatus, wherein the communication processing apparatus comprises:
a processing module, configured to: determine configuration information of a sounding reference signal SRS of a terminal device; and determine configuration information of a tracking reference signal TRS for the terminal device, wherein the configuration information of the TRS is used to configure one or more first TRS resources, and one first TRS resource exists between two adjacent first SRS resources in SRS resources configured based on the configuration information of the SRS.

19. The communication processing apparatus according to claim 18, wherein one first TRS resource exists before an initial first SRS resource configured based on the configuration information of the SRS.

20. The communication processing apparatus according to claim 18 or 19, wherein the communication processing apparatus further comprises a transceiver module; and
the transceiver module is configured to send the configuration information of the SRS and the configuration information of the TRS to the terminal device.

21. The communication processing apparatus according to any one of claims 18 to 20, wherein a cycle of first SRS resources is a positive integer multiple of a cycle of first TRS resources.

22. The communication processing apparatus according to any one of claims 18 to 21, wherein at least one first SRS resource of a plurality of first SRS resources configured based on the configuration information of the SRS is located in an uplink/downlink switch slot, and one first TRS resource exists in the uplink/downlink switch slot in which the first SRS resource exists;
at least one first SRS resource of a plurality of first SRS resources is located in an uplink slot, and one first TRS resource exists in an N^{th} downlink slot before the uplink slot in which the first SRS resource exists, wherein N is a positive integer;
at least one first SRS resource of a plurality of first SRS resources is located in an uplink slot, and one first TRS resource exists in an N^{th} uplink/downlink switch slot before the uplink slot in which the first SRS resource exists; or
at least one first SRS resource of a plurality of first SRS resources is located in an uplink/downlink switch slot, and one first TRS resource exists in an N^{th} downlink slot before the uplink/downlink switch slot in which the first SRS resource exists.

23. The communication processing apparatus according to any one of claims 18 to 22, wherein the processing module is further configured to:
determine that a type of the terminal device is a low-power high-accuracy positioning LPHAP terminal device.

24. The communication processing apparatus according to claim 23, wherein the processing module is specifically configured to:
receive capability information of the terminal device, wherein the capability information comprises information about the terminal device whose type is the low-power high-accuracy positioning LPHAP terminal device.

25. The communication processing apparatus according to any one of claims 18 to 24, wherein the processing module is specifically configured to:
receive first indication information from a positioning device, wherein the first indication information indicates the communication processing apparatus to configure, for the terminal device, a TRS resource associated with the SRS resource; and
determine the configuration information of the TRS based on the configuration information of the SRS and the first indication information.

26. The communication processing apparatus according to any one of claims 18 to 24, wherein the processing module is specifically configured to:
receive SRS resource reservation information and second indication information that are from a positioning device, wherein the second indication information indicates the communication processing apparatus to configure a TRS resource associated with an SRS resource corresponding to the SRS resource reservation information;
determine the configuration information of the SRS based on the SRS resource reservation information; and
determine the configuration information of the TRS based on the configuration information of the SRS and the second indication information.

27. A communication processing apparatus, comprising:
a transceiver module, configured to: receive configuration information of a sounding reference signal SRS and configuration information of a tracking reference signal TRS that are from an access network device, wherein the configuration information of the TRS is used to configure one or more first TRS resources, and one first TRS resource exists between two adjacent first SRS resources in SRS resources configured based on the configuration information of the SRS; receive the TRS based on the configuration information of the TRS; and send the SRS based on the configuration information of the SRS.

28. The communication processing apparatus according to claim 27, wherein one first TRS resource exists before an initial first SRS configured based on the configuration information of the SRS.

29. The communication processing apparatus according to claim 27 or 28, wherein a cycle of first SRS resources is a positive integer multiple of a cycle of first TRS resources.

30. The communication processing apparatus according to any one of claims 27 to 29, wherein at least one first SRS resource of a plurality of first SRS resources configured based on the configuration information of the SRS is located in an uplink/downlink switch slot, and one first TRS resource exists in the uplink/downlink switch slot in which the first SRS resource exists;
at least one first SRS resource of a plurality of first SRS resources is located in an uplink slot, and one first TRS resource exists in an N^{th} downlink slot before the uplink slot in which the first SRS resource exists, wherein N is a positive integer;
at least one first SRS resource of a plurality of first SRS resources is located in an uplink slot, and one first TRS resource exists in an N^{th} uplink/downlink switch slot before the uplink slot in which the first SRS resource exists; or
at least one first SRS resource of a plurality of first SRS resources is located in an uplink/downlink switch slot, and one first TRS resource exists in an N^{th} downlink slot before the uplink/downlink switch slot in which the first SRS resource exists.

31. The communication processing apparatus according to any one of claims 27 to 30, wherein the transceiver module is further configured to:
send capability information to the access network device or a positioning device, wherein the capability information comprises information about a communication processing apparatus whose type is a low-power high-accuracy positioning LPHAP terminal device.

32. A communication processing apparatus, wherein the communication processing apparatus comprises:
a transceiver module, configured to send first indication information to an access network device, wherein the first indication information indicates the access network device to configure, for a terminal device, a tracking reference signal TRS resource associated with a sounding reference signal SRS resource.

33. The communication processing apparatus according to claim 32, wherein the transceiver module is further configured to:
receive capability information from the terminal device, wherein the capability information comprises information about a terminal device whose type is a low-power high-accuracy positioning LPHAP terminal device.

34. A communication processing apparatus, wherein the communication processing apparatus comprises:
a transceiver module, configured to send sounding reference signal SRS resource reservation information and second indication information to an access network device, wherein the second indication information indicates the access network device to configure, for a terminal device, a TRS resource matching an SRS resource corresponding to the SRS resource reservation information.

35. A communication processing apparatus, wherein the communication processing apparatus comprises a processor, and the processor is configured to invoke a computer program or computer instructions in a memory, to enable the communication processing apparatus to perform the method according to any one of claims 1 to 9, or enable the communication processing apparatus to perform the method according to any one of claims 10 to 14, or enable the communication processing apparatus to perform the method according to claim 15 or 16, or enable the communication processing apparatus to perform the method according to claim 17.

36. A computer-readable storage medium, comprising computer instructions, wherein when the computer instructions are run on a computer, the computer is enabled to perform the method according to any one of claims 1 to 17.
